(19) Europäisches Patentamt

European Patent Office

Office européen des brevets

(11) **EP 1 043 859 B1**

(12) **EUROPEAN PATENT SPECIFICATION**

(45) Date of publication and mention
of the grant of the patent:
**27.12.2006 Bulletin 2006/52**

(51) Int Cl.:
***H04J 14/02*** (2006.01)

(21) Application number: **00107083.8**

(22) Date of filing: **05.04.2000**

(54) **Optical add/drop multiplexer node device**

Knoteneinrichtung mit optischem Dropp-and-Add-Multiplexer

Dispositif nodal à multiplexage optique pour insertion et extraction

(84) Designated Contracting States:
**DE FR GB**

(30) Priority: **05.04.1999 JP 9816799**
**22.09.1999 JP 26904099**

(43) Date of publication of application:
**11.10.2000 Bulletin 2000/41**

(73) Proprietor: **KABUSHIKI KAISHA TOSHIBA**
**Kawasaki-shi**
**Kanagawa (JP)**

(72) Inventors:
 • **Miyachi, Masahide**
 **Kawasaki-shi,**
 **Kanagawa (JP)**
 • **Fujima, Harumi**
 **Kawasaki-shi,**
 **Kanagawa (JP)**
 • **Shibagaki, Taro**
 **Tokyo (JP)**

(74) Representative: **HOFFMANN EITLE**
**Patent- und Rechtsanwälte**
**Arabellastrasse 4**
**81925 München (DE)**

(56) References cited:
 **EP-A- 0 716 521        EP-A- 0 847 158**
 **WO-A-98/05133        WO-A-98/49794**
 **WO-A-99/12297        WO-A-99/13607**
 **WO-A-99/60740        CA-A- 2 203 729**
 **JP-A- 11 027 707**

 • **YOSHIZAWA N ET AL: "RECONFIGURABLE OPTICAL ADD/DROP MULTIPLEXER FOR 32CHANNEL DENSE WAVELENGTH DIVISION MULTIPLEXING SYSTEMS" PROCEEDINGS OF THE EUROPEAN CONFERENCE ON NETWORKS AND OPTICAL COMMUNICATIONS 1999. NOC'99. BROADBAND ACCESS AND TECHNOLOGY, AMSTERDAM : IOS PRESS, NL, vol. PART 1, 1999, pages 301-307, XP000829401 ISBN: 90-5199-496-6**
 • **PATENT ABSTRACTS OF JAPAN vol. 1998, no. 09, 31 July 1998 (1998-07-31) & JP 10 112700 A (NEC CORP), 28 April 1998 (1998-04-28) -& US 6 023 359 A (ASAHI KOJI) 8 February 2000 (2000-02-08)**
 • **TOBA H ET AL: "AN OPTICAL FDM-BASED SELF-HEALING RING NETWORK EMPLOYING ARRAYED WAVEGUIDE GRATING FILTERS AND EDFA'S WITH LEVEL EQUALIZERS" IEEE JOURNAL ON SELECTED AREAS IN COMMUNICATIONS, IEEE INC. NEW YORK, US, vol. 14, no. 5, 1 June 1996 (1996-06-01), pages 800-813, XP000590716 ISSN: 0733-8716**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

BACKGROUND OF THE INVENTION

1. Field of the Invention

The present invention relates to a node device provided in a light-wave network employing wavelength division multiplexing, and more particularly to an optical add/drop multiplexer node device which drops an optical signal of arbitrary wavelength output from a wavelength-multiplexed optical signal and adds an optical signal of desired wavelength to a wavelength-multiplexed optical signal.

2. Description of the Related Art

In accordance with popularization of the Internet, increasing the capacity of a network is an urgent necessity. A light-wave network using wavelength division multiplex (hereinafter referred to simply as "WDM") has the potentiality of dramatically increasing traffic volume and establishing a highly flexible network, and hence the light-wave network attracts much attention as one means for responding to the necessity of increasing capacity.

An optical add/drop multiplexer (hereinafter referred to simply as an "OADM") having the function of adding/dropping an optical signal of specific wavelength has already been available as a light-wave network using WDM. The OADM is one embodiment of a transparent light-wave network which does not involve conversion of an optical signal into an electrical signal and vice versa, which would otherwise be carried out in each node. Rather, only a required optical signal is added or dropped in each node, thus diminishing node costs. Further, if a ring-shaped network is established through use of an OADM, a failure in the network can be addressed flexibly, thus enabling establishment of a highly reliable light-wave network.

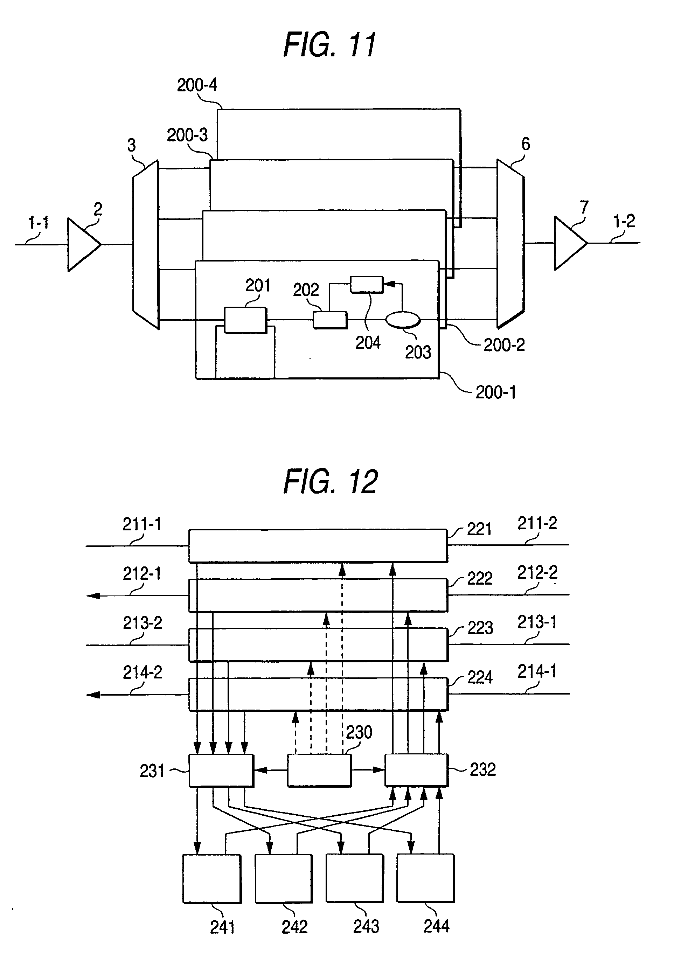

FIG. 11 shows the configuration of a known optical add/drop multiplexer node (hereinafter referred to simply as an "OADM node device") employed in an OADM. A wavelength-multiplexed optical signal transmitted over an optical transmission path 1-1 is amplified by one operation, and the thus-amplified optical signals are separated according to wavelength by means of a wavelength demultiplexer 3. The optical signals of respective wavelengths that have been separated from one another are input to optical add/drop multiplexer circuits (hereinafter referred to simply as "optical add/drop circuits") 200-1, 200-2, 200-3, and 200-4, respectively. Each of the optical add/drop circuits 200-1 to 200-4 comprises a two-input/two-output optical switch 201, a variable optical attenuator 202, an optical coupler 203, and a control section 204. Adding, dropping, or passage of an optical signal is enabled by control of the optical switch 201.

After the optical signal output from the optical switch 201 has passed through the variable optical attenuator 202, a portion of the optical signal is branched by an optical coupler 203, and the thus-dropped optical signal is delivered to the control section 204. The remaining optical signals output from the optical coupler 203 are wavelength-multiplexed by an optical multiplexer 6, and the thus-multiplexed signal is amplified by an optical amplifier 7. The thus-amplified optical signal is output to an optical transmission path 1-2. The control section 204 controls the amount of attenuation achieved by the variable optical attenuator 202 such that the power of the optical signal branched by the optical coupler 203 becomes constant.

In the known OADM node device having the foregoing configuration, the optical switch 201 performs adding operation and dropping operation simultaneously. In the event that a failure arises in the optical switch 201 during a dropping operation, the optical signal which is in the process of being dropped is made to pass through the node. As a result, information is leaked to another node, thus significantly deteriorating the reliability of the network.

A wavelength division multiplex network is given the function of protecting the network from a network failure, such as a failure in a transmission path, thus improving the reliability of the network. Japanese Patent Laid-Open No. 112700/1998 describes an OADM node device having a protection function.

FIG. 12 is a circuit diagram showing the configuration of the OADM node device described in the above-described patent publication. Clockwise optical transmission paths (serving as a "working system") 211-1 and 211-2, counterclockwise optical transmission paths (serving as a "working system") 212-1 and 212-2, clockwise optical transmission paths (serving as a "protection system") 213-1 and 213-2, and counterclockwise optical transmission paths (serving as a "protection system") 214-1 and 214-2 transmit wavelength-multiplexed optical signals. An optical add/drop multiplex (OADM) circuit 221 connected to the optical transmission paths 211-1 and 211-2, an optical add/drop circuit 222 connected to the optical transmission paths 212-1 and 212-2, an optical add/drop circuit 223 connected to the optical transmission paths 213-1 and 213-2, and an optical add/drop circuit 224 connected to the optical transmission paths 214-1 and 214-2 add and drop, from among wavelength-multiplexed optical signals, only the optical signals of wavelengths assigned to the OADM node device.

The optical signal which is input from the optical transmission path 211-1 and is dropped by the optical add/drop circuit 221 is input to an optical transceiver 241 by way of a first optical matrix switch 231. The optical signal which is input from the optical transmission path 212-2 and is dropped by the optical add/drop circuit 222 is input to an optical transceiver 242 by way of the first optical matrix switch 231. The optical signal which is input from the optical transmission path 213-2 and is dropped by the optical add/drop circuit 223 is input to an optical transceiver 243 by way of the first optical matrix switch 231. The optical signal which is input from the optical transmission path 214-1 and is dropped by the optical add/drop circuit 224 is input to an optical transceiver 244 by way of the first optical matrix switch 231. The optical signal output from the optical transceiver 241 is input to the optical add/drop circuit 221 by way of a second optical matrix switch 232 and is delivered to the optical transmission path 211-2. The optical signal output from the optical transceiver 242 is input to the optical add/drop circuit 222 by way of the second optical matrix switch 232 and is delivered to the optical transmission path 212-1. The optical signal output from the optical transceiver 243 is input to the optical add/drop circuit 223 by way of the second optical matrix switch 232 and is delivered to the optical transmission path 213-1. The optical signal output from the optical transceiver 244 is input to the optical add/drop circuit 224 by way of the second optical matrix switch 232 and is delivered to the optical transmission path 214-2. The optical matrix switches 231 and 232 connect an arbitrary input port to an arbitrary output port, and the connecting operations of the optical matrix switches 231 and 232 are controlled by the control section 230.

In the event of occurrence of a failure in a transmission path, the optical matrix switches 231 and 232 provided at the transmission end and the receiving end of the network are controlled, to thereby select the optical transmission paths (i.e., a protection system) 213-1, 213-2, 214-1, and 214-2 and circumvent the failure. In the OADM node device having such a protection function, in the event of occurrence of a failure in a transmission path, the transmission end and the receiving end of the network must be controlled so as to be switched at all times. In such a case, the OADM node device encounters a problem of troublesome control and involves an increase in cost and deterioration in reliability of the network.

In the known OADM node device, switching between optical switches is carried out at high speed at the time of reconfiguration (updating) of an optical path or restoration of the node from a failure. However, high-speed switching between the switches induces a sharp increase or decrease in the number of wavelengths of optical signals to be transmitted over the optical transmission path, thus resulting in occurrence of a significant fluctuation in the total optical power of an optical signal traveling through the optical transmission path. The fluctuation in turn causes the optical amplifier inserted in the optical transmission path to induce an optical surge. The optical surge induces not only a deterioration in the receiving sensitivity of an optical receiver, but also rupture of the optical receiver. In a known mechanical optical switch or an optical switch utilizing a magneto-optic effect, the speed of fluctuation of optical power, which would be induced by switching operation of the optical switch, cannot be set freely, thus imposing a limitation on the degree of freedom in system design.

In the previously-described known OADM node device, one of the ports of the optical demultiplexer 3 desirably outputs only an optical signal of desired wavelength $\lambda_1$. However, due to the cross-talk characteristic of the wavelength demultiplexer 3, the optical signal of wavelength $\lambda_1$ may leak to any other port. When the optical signals are merged into a single optical signal by the optical multiplexer 6, such leakage of the optical signal of wavelength $\lambda_1$ induces coherent cross-talk, thereby deteriorating the transmission characteristic of the OADM node device.

In association with an increase in the bandwidth of an optical amplifier for compensating a loss in an optical transmission path or a node, the number of wavelengths capable of being multiplexed into a single optical transmission path has recently increased to 16, 32, and 64. An increase in the number of wavelengths induces an increase in the number of optical paths in a single node, which paths would cause coherent cross-talk. In a case where a plurality of nodes are interconnected in the form of multistage connection, the transmission characteristics of the nodes are significantly degraded.

In association with an increase in the number of wavelengths, Ozeki *et al.* proposed a matrix wavelength multiplexing technique for forming a hierarchical structure of optical path layers in consideration of scalability and modularity, as well as economy of an optical element (Transaction B-10-86, Convention of the Communication Society of the Institute of Electronic, Information, and Communication Engineers, 1997).

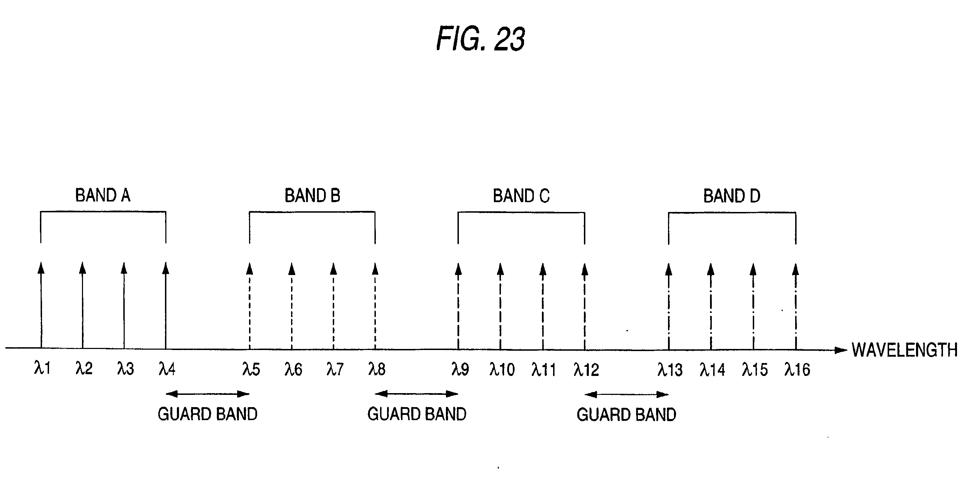

FIG. 23 shows the pattern of a wavelength employed in a matrix wavelength multiplexing technique. Wavelength-multiplexed optical signals are handled on a per-band basis. According to this technique in which a band is formed for each of adjacent channels, a guard band for preventing cross-talk between bands must be provided at the time of separation of signals on a per-band basis, thus deteriorating the efficiency of utilization of a bandwidth.

In a case where the redundancy configuration of a node with respect to each of constituent elements assumes 1:1 redundancy, the scale and cost of the node becomes enormous in the event of an increase in the number of wavelengths. In the case of a light-wave network using wavelength division multiplexing, there is employed an N:1 redundancy configuration, in which one protection system is assigned to a plurality of working systems, thereby reducing the scale of the node and curtailing node costs. A report on the N:1 redundancy configuration has already been provided by Mr. D. Uehara (ECOC' 97, TH2A). According to this report, the optical signals which have been separated according to wavelength by the wavelength demultiplexer are input to an optical add/drop circuit by way of an optical matrix switch. One of the wavelengths of the optical signals separated by the wavelength demultiplexer is assigned to a protection system. In the event of occurrence of a failure of an optical add/drop circuit (of the working system), a communications line is bypassed to a protection system by means of the optical matrix switch, thereby restoring the node to normal operation.

As means for assuming an N:1 redundancy configuration, an optical matrix switch has been employed. In an N:1 redundancy configuration, the greater the value of N, the more economical the node. For this reason, demand exists for a large-scale optical matrix switch. However, in terms of performance, cost, and reliability, great difficulty is encountered in putting such a large-scale optical matrix switch into actual use. Therefore, an increase in the number of wavelengths involves an increase in node costs.

As mentioned above, in the known OADM node device, in the event of a failure arising in the optical add/drop circuit, information of an optical signal may leak to another node, thus considerably deteriorating the reliability of the network. Further, the OADM node device having the protection function always involves control of switching between optical switches at each of the transmission and receiving ends of the network, thus requiring complicated control operations. Thus, the OADM node device suffers problems in terms of cost and reliability.

Further, in the known OADM node device, as the number of wavelengths increases, the number of optical paths increases, which would induce coherent cross-talk. Accordingly, in a case where OADM node devices are connected in the form of multistage connection, considerable deterioration arises in the transmission characteristics of the node.

In a case where optical paths are arranged in a hierarchical structure, guard bands for preventing occurrence of cross-talk between adjacent bands must be provided, thereby deteriorating the efficiency of utilization of a bandwidth.

An optical matrix switch must be provided as means for imparting an N:1 redundancy configuration to the known node, thus involving an increase in node costs.

Japanese Patent JP 10112700, also the subject matter of US-A-6, 023,359, discloses an optical device comprising a plurality of nodes connected in a ring and using wavelength division multiplex for light signals. Each node is connected by a first bi-directional pair of working transmission lines and a second bi-directional pair of protection transmission lines. Signals can be bi-directionally propagated around the ring to fill in any unavailable paths. Each node comprises dual four wide add/drop facilities with optical switches, four wide multiplexers and four wide demultiplexers so that node specific individual wavelengths can be directed to and from the node, the other wavelengths being passed through the switches unchanged. The present invention seeks to improve the optical switching process.

PCT Patent Application WO 98/05133 discloses a wavelength division multiplexed add/drop node where Bragg grating filters are use for spectral selectivity. A respective Bragg grating filter is employed for selection of each wavelength. The present invention seeks to provide improvement in the signal selection process.

Canadian Patent Application 2,203,729 A1 discloses separation of a mixed wave WDM signal by reflection from a Fabry-Perot etalon. The present invention seeks to provide for use of an improved means of wavelength separation.

SUMMARY OF THE INVENTION

Accordingly, the present invention is aimed at providing an OADM node device capable of preventing leakage of information to another node in the event of occurrence of a failure in an optical add/drop circuit and establishing a highly reliable network.

The present invention is also aimed at providing an OADM node device capable of embodying a flexible protection function through a simple switching control operation.

The present invention is also aimed at providing an OADM node device capable of preventing occurrence of an optical surge at the time of updating of an optical path or at the time of one optical path being switched to another one, as well as capable of attaining a stable transmission characteristic.

The present invention is also aimed at providing an OADM node device capable of preventing deterioration in the transmission characteristic of the node, which would otherwise be caused as a result of an increase in the number of wavelengths, as well as capable of improving the efficiency of utilization of a bandwidth.

The present invention is also aimed at providing an OADM node device capable of embodying an N:1 redundancy configuration at low cost even in the case of an increase in the number of wavelengths.

Drop optical switches and add optical switches can be controlled independently. Even in the event that the drop optical switch is switched from a dropping operation state (i.e., in a state in which the input port is connected to the second output port) to a through operation state (i.e., in a state in which the input port is connected to the first output port) because of occurrence of a failure, the add optical switch is forcefully brought into an adding operation state (i.e., the second input port is connected to the output port), thereby preventing leakage of an optical signal to another node.

In the optical add/drop multiplexer node device, a variable optical attenuator is interposed between the first output port of the drop optical switch and the first input port of the add optical switch, thereby enabling individual control of operation of the drop optical switch and operation of the add optical switch, as well as control of attenuation of the variable optical attenuator.

A variable optical attenuator is interposed between the drop optical switch and the add optical switch, and the attenuation of the variable optical attenuator is set to be larger than a predetermined level at the time of a dropping operation of the drop optical switch (i.e., in a state in which the input port is connected to the second output port). Even in the event that a failure arises in the drop optical switch, to thereby connect the input port to the first output port and that the optical signal which is in the process of being dropped is made to pass through the drop optical switch, the optical signal is sufficiently attenuated by the variable optical attenuator. Further, even in the event that a failure simultaneously arises in the add optical switch, to thereby connect the first input port to the output port and bring the add optical switch into a through operation state, leakage of an optical signal to another node is prevented, thus improving the reliability of a light-wave network to a much greater extent.

During an optical signal being transmitted through the optical add/drop multiplexer node device (i.e., in a state in which the input port of the drop optical switch is connected to the first output port and in which the first input port of the add optical switch is connected to the output port), the attenuation of the variable optical attenuator is controlled such that the optical signal in the process of being transmitted is made to have constant power. Accordingly, there can be coped with a variation in the power level of the optical signal stemming from a variation in the number of wavelengths, thus achieving a stable transmission characteristic.

Further, either at least one of optical amplifiers inserted into the optical transmission path or the optical receiver has an automatic gain control function of predetermined time constant, and the drop optical switch and the add optical switch perform switching operations at a time constant larger than the response time of the automatic gain control function. As a result, a variation in optical power, which would arise at the time of reconstruction of an optical transmission path, can be absorbed by the AGC functions of the optical amplifiers and the AGC functions of the optical receiver, thus achieving a stable transmission characteristic.

In such a case, optical switches using a thermo-optic effect or an acousto-optic effect are employed as the drop optical switch and the add optical switch. Setting of a switching operation speed (a time constant) of the optical switches can be given a high degree of freedom, thus smoothing a variation in optical power, which would arise during a switching operation, and preventing occurrence of optical surge.

An optical coupler for branching a portion of the optical signal is interposed between the add optical switch and the multiplexer, and monitoring means monitor a predetermined transmission characteristic value of the optical signal branched by the optical coupler. In the event that the transmission characteristic value exceeds a preset level, the monitoring means produce an anomaly signal, thereby preventing occurrence of a failure in a light-wave network before it actually occurs. Here, an optical power level may be used as a predetermined transmission characteristic value of an optical signal. Particularly, a Q value is desirable. So long as a Q value is monitored, location of a failure can be facilitated, thus shortening the time required for restoring the network from a failure and improving the efficiency of utilization of a light-wave network.

The present invention provides an optical add/drop multiplexer node device which is connected into a ring-shaped arrangement by way of at least one first working-system optical transmission path for transmitting a wavelength-multiplexed optical signal clockwise, at least one second working-system optical transmission path for transmitting the wavelength-multiplexed optical signal counterclockwise, at least one first protection optical transmission path for transmitting the wavelength-multiplexed optical signal clockwise, and at least one second protection optical transmission path for transmitting the wavelength-multiplexed optical signal counterclockwise, the node device comprising:

optical add/drop circuits which are inserted at any points of the respective first working-system optical transmission path, second working-system optical transmission path, first protection optical transmission path, and second protection optical transmission path and which add or drop an optical signal of at least one wavelength;
an optical receiver for receiving the optical signal dropped by the optical add/drop circuit;
an optical transmitter for transmitting an optical signal added by the optical add/drop circuit;
a first optical path changeover switch which is provided at an input/output section of the optical add/drop circuit and effects switching between the first working-system optical transmission path and the first protection optical transmission path;
a second optical path changeover switch which is provided at an input/output section of the optical add/drop circuit and effects switching between the second working-system optical transmission path and the second protection optical transmission path;
a third optical path changeover switch which is interposed between the optical add/drop circuit and the optical receiver and which switches an optical transmission path of the optical signal dropped by the optical drop/add circuit; and
a fourth optical path changeover switch which is interposed between the optical add/drop circuit and the optical transmitter and which switches an optical transmission path of the optical signal added by the optical drop/add circuit.

As mentioned above, the first and second optical path changeover switches are provided at an input/output section of the optical add/drop circuit for effecting switching between optical transmission paths so as to transmit a wavelength-multiplexed optical signal in a single direction. In the event of occurrence of a failure in the working-system optical transmission path, switching between optical transmission paths is performed at only both ends of a failed section of the optical transmission path, thus avoiding a failure. Further, a third optical path changeover switch is interposed between the optical add/drop circuit and the optical receiver. In the event of occurrence of failures in both the working-system optical transmission path and the protection optical transmission path, the failure can be avoided by means of the third optical path changeover switch. Accordingly, a flexible protection function capable of coping with various failures can be achieved by a simple switching control method.

Either the optical receiver or at least one of optical amplifiers inserted at any points of the respective first working-system optical transmission path, second working-system optical transmission path, first protection optical transmission path, and second protection optical transmission path has an automatic gain control function of predetermined time constant, and the first through fourth optical path changeover switches perform switching operations at a time constant larger than the time constant of the automatic gain control function. A variation in optical power, which would arise at the time of reconstruction of an optical transmission path can be absorbed by means of the AGC function of optical amplifiers and optical receivers, thereby achieving a stable transmission characteristic.

In such a case, optical switches using a thermo-optic effect or an acousto-optic effect are employed as the drop optical switch and the add optical switch. Setting of a switching operation speed (a time constant) of the optical switches can be given a high degree of freedom, thus smoothing a variation in optical power, which would arise during a switching operation, and preventing occurrence of optical surge.

The present invention further provides an optical add/drop multiplexer node device for use with a light-wave network having at least one pair of optical transmission paths for transmitting optical signals in opposite directions, the node device comprising:

first optical demultiplexing means for dividing, into a plurality of wavelength groups, a wavelength-multiplexed optical signal which has been transmitted over the respective optical transmission path;
first optical multiplexing means which multiplexes the wavelength groups into an optical signal and supplies the optical signal to the optical transmission path;
second optical demultiplexing means which is provided for each of the wavelength groups and divides an optical signal belonging to the wavelength group according to wavelength;
add/drop means for adding/dropping each of the optical signals divided by the second optical demultiplexing means; and
second optical multiplexing means which multiplexes the optical signals output from the add/drop means, thus reconstructing the wavelength group, wherein the first optical demultiplexing means and the first optical multiplexing means correspond to an arrayed waveguide grating (AWG)-type optical demultiplexer/multiplexer having a free spectral range periodicity.

A wavelength-multiplexed optical signal which has been transmitted is divided into wavelength groups by means of a first optical demultiplexer, and each of the wavelength groups is further divided according to wavelength by a second optical demultiplexer, thereby reducing the number of optical transmission paths which induce coherent cross-talk to the number of wavelengths pertaining to a single wavelength group. Therefore, even in the case of an increase in the total number of wavelengths, there can be prevented deterioration in the transmission characteristic of the light-wave network, which would otherwise be caused by coherent cross-talk.

An arrayed waveguide grating (AWG)-type optical demultiplexer/multiplexer having a free spectral range (FSR) periodicity is employed as the first optical demultiplexing means and the first optical multiplexing means, thereby obviating a necessity for provision of a guard band between adjacent wavelengths for dividing, into wavelength groups, a wavelength-multiplexed optical signal that has been transmitted. Consequently, the efficiency of bandwidth utilization is improved.

If demultiplexing/multiplexing of an optical signal is performed on a per-wavelength-group-basis through use of the FSR periodicity of the AWG, insertion loss arising in the AWG will differ from one wavelength group to another. In contrast, insertion loss arising in the optical signals of wavelengths belonging to respective wavelength group is substantially uniform. Consequently, a variation in insertion loss arising in the AWG can be compensated for on a per-wavelength-group basis by means of controlling the level of optical power, and hence the number of variable optical attenuators can be significantly diminished, thus reducing node costs.

In each of the wavelength groups, the interval between wavelengths is as broad as the free spectral range (FSR) of the AWG. Therefore, optical elements having a sufficiently broad transmission bandwidth can be used as the second optical demultiplexer and the second optical multiplexer rather than the first optical demultiplexer and the first optical multiplexer. Therefore, even when OADM node devices are connected in the form of multistage connection, the second optical demultiplexers and the second optical multiplexers do not induce narrowing of a transmission bandwidth of the OADM node device.

The transmission bandwidth of the second optical demultiplexer and the transmission bandwidth of the second optical multiplexers are set to include two adjacent wavelengths. So long as either of the adjacent wavelengths is assigned to a working system and the remaining wavelength is assigned to a protection system, there can be embodied a redundancy configuration for a failure in a working-system device.

An optical add/drop multiplexer node device for use with a light-wave network having at least one pair of optical transmission paths for transmitting optical signals in opposite directions, the node device comprising:

first optical demultiplexing means for dividing, into a plurality of wavelength groups, a wavelength-multiplexed optical signal which has been transmitted over the respective optical transmission path;

first optical multiplexing means which multiplexes the wavelength groups into an optical signal and supplies the optical signal to the optical transmission path;

a plurality of first one-input/two-output optical switches for changing the transmission direction of an optical signal output from the first optical demultiplexing means;

second optical demultiplexing means which is connected to the first output port of the first optical switches and divides an optical signal belonging to the wavelength group according to wavelength;

first add/drop means for adding/dropping each of the optical signals divided by the second optical demultiplexing means; and

second optical multiplexing means which multiplexes the optical signals output from the add/drop means, thus reconstructing the wavelength group;

third optical demultiplexing means which is connected to the second output ports of the first optical switches and has a wavelength routing function;

second add/drop means which adds or drops the optical signal output from the third optical demultiplexing means;

third optical multiplexing means which multiplexes the optical signals output from the second add/drop means and has a wavelength routing function; and

a second optical switch which receives a signal output from the second optical multiplexing means and a signal output from the third optical multiplexing means and has two input ports and one output port.

The optical signal output from the first optical demultiplexer is input to either the working-system optical add/drop circuit or the protection optical add/drop circuit by switching the transmission direction of the first optical switch. In the protection optical add/drop circuit, optical elements having a wavelength routing function are employed as the third optical demultiplexer and the third optical multiplexer. The third optical demultiplexer is characterized in that if an optical signal enters a different input port, an optical signal having a different wavelength appears in the output port. Therefore, the optical signal whose wavelength is divided into wavelength groups by the first optical demultiplexer enters a different input port of the third optical demultiplexer. As a result, the second add/drop means connected to the output of the third optical demultiplexer can be used for all wavelength groups. The optical signals output from the second add/drop means are multiplexed by an optical multiplexer having a similar function, whereby optical signals belonging to the wavelength groups can be output from a different output port of the third optical multiplexer.

A protection optical add/drop circuit is formed through use of an optical demultiplexer and an optical multiplexer, each having a wavelength routing function. The function of a system of N:1 redundancy can be achieved without use of an optical matrix switch.

## BRIEF DESCRIPTION OF THE DRAWINGS

FIG. 1 is a schematic diagram showing the configuration of an exemplary optical add/drop multiplexer node device.

FIG. 2 is a schematic diagram for describing an operation for avoiding a failure performed by the optical add/drop multiplexer node device of Fig. 1;

FIG. 3 is a schematic diagram showing a specific example of an optical switch used as a drop optical switch and an add optical switch of the present invention;

FIG. 4 is a graph for describing switching operations of the optical switches;

FIG. 5 is a schematic diagram showing the configuration of another exemplary optical add/drop multiplexer node device according to a second embodiment of the present invention;

FIG. 6 is a block diagram showing an example configuration of a monitor section according to Figure 5;

FIG. 7 is a block diagram showing the configuration of an optical add/drop multiplexer node device according to a first embodiment of the present invention;

FIG. 8 is a block diagram for describing an operation for avoiding a failure performed in the event of occurrence of a failure in a working-system optical transmission path of the first embodiment;

FIG. 9 is a block diagram for describing an operation for avoiding a failure performed in the event of occurrence of a failure in a working-system optical add/drop circuit of the first embodiment;

FIG. 10 is a block diagram for describing an operation for avoiding failures performed in the event of occurrence of failures in a working-system and protection optical transmission paths of the first embodiment;

FIG. 11 is a block diagram showing the configuration of a known optical add/drop multiplexer node device;

FIG. 12 is a block diagram showing the configuration of a known optical add/drop multiplexer node device taking into consideration avoidance of a failure arising in a network;

FIG. 13 is a block diagram showing the configuration of an optical add/drop multiplexer node device according to a second embodiment of the present invention;

FIG. 14 is an illustration for showing the pattern of wavelength groups according to the present invention;

FIG. 15 is a graph showing the nature of deterioration stemming from coherent cross-talk arising when OADM node devices are connected in the form of multistage connection;

FIG. 16 is a block diagram showing the configuration of an optical add/drop multiplexer node device according to a third embodiment of the present invention;

FIG. 17 is a block diagram showing the configuration of an optical add/drop multiplexer node device according to a fourth embodiment of the present invention;

FIG. 18 is a schematic diagram for describing an operation for avoiding a failure arising in the OADM node device of the sixth embodiment;

FIG. 19 is a block diagram showing the configuration of an optical add/drop multiplexer node device according to a fifth embodiment of the present invention;

FIG. 20 is a schematic diagram for describing an operation for avoiding a failure arising in the OADM node device of the fifth embodiment;

FIG. 21 is a block diagram showing the configuration of an optical add/drop multiplexer node device according to a sixth embodiment of the present invention;

FIG. 22 is a schematic diagram for describing an operation for avoiding a failure arising in the OADM node device of the sixth embodiment; and

FIG. 23 is an illustration showing a conventional wavelength pattern for forming a hierarchical structure of optical path layers.

## DETAILED DESCRIPTION OF THE PREFERRED EMBODIMENTS

Preferred embodiments of the present invention will be described hereinafter by reference to the accompanying drawings.

(First Embodiment)

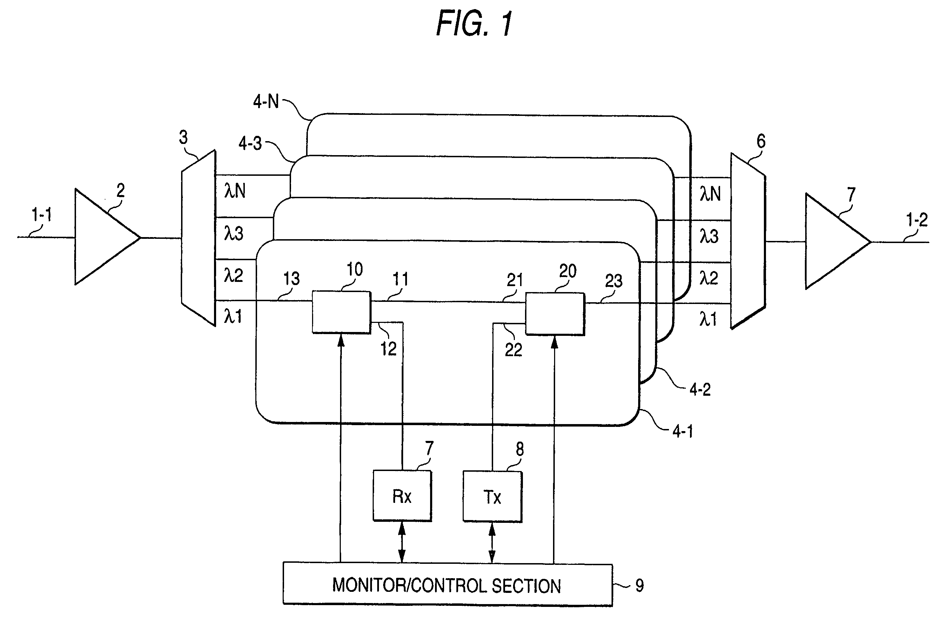

FIG. 1 shows an exemplary optical add/drop multiplexer node device (hereinafter referred to simply as an "OADM node device"). An OADM node device is disposed at each of nodes of a ring-shaped WDM light-wave network and has the function of adding/dropping an optical signal of specific wavelength.

A wavelength-multiplexed optical signal (including wavelengths $\lambda_1$, ..., $\lambda_N$) transmitted over an incoming optical transmission path 1-1 is separated into optical signals of wavelengths $\lambda_1$, ..., $\lambda_N$ by means of an optical demultiplexer 3 after being amplified by an optical amplifier 2. The optical signals of wavelengths $\lambda_1$, ..., $\lambda_N$ separated by the optical demultiplexer 3 are input to corresponding optical add/drop multiplexer circuits (hereinafter referred to simply as "optical add/drop circuits") 4-1, ... 4-N. The optical signals output from the optical add/drop circuits 4-1 to 4-N are wavelength-multiplexed by an optical multiplexer 6. The thus-multiplexed optical signal is delivered to an outgoing optical transmission path 1-2 after having been amplified by an optical amplifier 7.

Each of the optical add/drop circuits 4-1 to 4-N comprises a one-input/two-output drop optical switch 10 and a two-input/one-output add optical switch 20. Although FIG. 1 shows the internal configuration of only the optical add/drop circuit 4-1, the remaining optical add/drop circuits 4-2 to 4-N have the same internal configuration.

An input port 13 of the drop optical switch 10 is connected to an output terminal of the optical demultiplexer 3. A first output port 11 of the drop optical switch 10 is connected to a first input port 21 of the add optical switch 20. A second output port 12 is connected to an optical receiver 7, and a second input port 22 of the add optical switch 20 is connected to an optical transmitter 8. Further, an output port 23 of the add optical switch 20 is connected to an input terminal of an optical multiplexer 6.

A monitor and control section 9 controls the operation of the drop optical switch 10 and the operation of the add optical switch 20 and monitors the status of the optical receiver 7 and the status of the optical transmitter 8. By means of a control operation of the monitor and control section 9, the input port 13 of the drop optical switch 10 is connected to the second output port 12 at the time of a drop operation of the OADM node device, and the second input port 22 of the add optical switch 20 is connected to the output port 23 at the time of an add operation of the OADM node device. At the time of a through operation of the OADM node device, the input port 13 of the drop optical switch 10 is connected to the first output port 11, and the first input port 21 of the add optical switch 20 is connected to the output port 23.

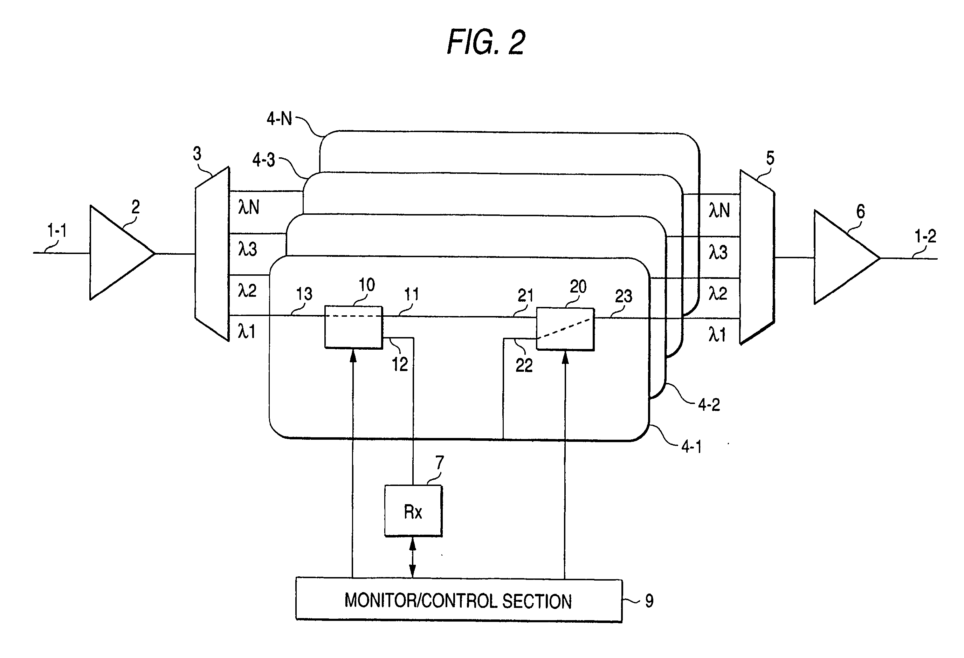

FIG. 2 shows the dropping action of the drop optical switch 10; that is, the input port 13 is connected to the second output port 12. Further, FIG. 2 shows the through state of the add optical switch 20; that is, the first input port 21 is connected to the output port 23. In the event of a failure arising in the drop optical switch 10, the input port 13 is connected to the first output port 11, as designated by a broken line. In such a case, the monitor and control section 9 brings the add optical switch 20 into an adding state; that is, the second input port 22 is connected to the output port 23, as designated by a broken line.

At this time, the first input port 21 of the add optical switch 20 is brought into an open state, and hence the optical signal which has traveled through the drop optical switch 10 is terminated by the add optical switch 20, thus preventing outputting of the optical signal by way of the optical add/drop circuit 4-i (i=1, ..., N). The monitor and control section 9 detects a failure in the drop optical switch 10 by monitoring, for example, the power of the light received by the optical receiver 7. When the power of received light has dropped to a predetermined value or less, the monitor and control section 9 detects occurrence of a failure in the drop optical switch 10.

In the Fig. 1, an optical add/drop multiplexer switch, which conventionally would have been embodied by a single two-input/two-output optical switch, is formed from the one-input/two-output drop optical switch 10 and the two-input/one-output add optical switch 20, which are disposed separately. Even in the event of occurrence of a failure in the drop optical switch 10, leakage of an optical signal can be prevented by individual control of the drop optical switch 10 and the add optical switch 20, thereby enabling establishing of a highly reliably light-wave network.

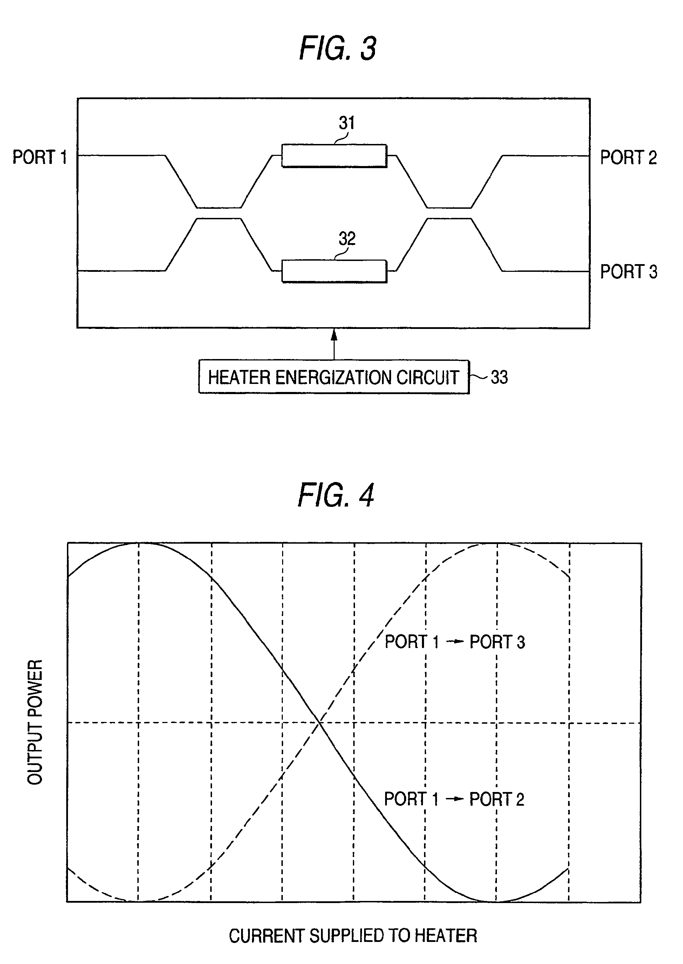

An optical switch utilizing, for example, either a thermo-optic effect or acousto-optic effect is preferably employed for the drop optical switch 10 and the add optical switch 20. FIG. 3 shows an example configuration of an optical switch using a thermo-optic effect. The optical switch comprises a Mach-Zehnder interferometer formed on a quartz substrate and heaters 31 and 32 provided on respective arms of the Mach-Zehnder interferometer. An electric current is applied to the heaters 31 and 32 by way of a heater energization circuit 33 provided within the monitor and control section 9 shown in FIG. 1, whereupon the heaters 31 and 32 are heated. In a case where the optical switch corresponds to the drop optical switch 10, a port 1 corresponds to the input port 13, a port 2 corresponds to the first output port 11, and the port 3 corresponds to the second output port 12.

FIG. 4 shows the characteristic of power of an optical signal output from the port 1 to the port 2 when an electric current is applied to the heater 31, as well as the characteristic of power of an optical signal output from the port 1 to the port 3 when an electric current is applied to the heater 32. The distribution of power of the signal output to the port 2 is changed by control of the amount of electric current applied to the heater 31, and the distribution of power of the signal output to the port 3 is changed by control of the amount of electric current applied to the heater 32. With a range where a small amount of electric current is applied to the heaters 31 and 32, an optical signal output to the port 2 is of high power. In contrast, within a range where a large amount of electric current is applied to the heaters 31 and 32, an optical signal output to the port 3 is of high power. It is seen that switching between the ports 2 and 3 can be effected by changing the magnitude of electric current applied to the heaters 31 and 32. Further, it is evident that the power of the optical signals output to the ports 2 and 3 is smoothly changed in response to application of an electric current to the heaters 31 and 32.

So long as an optical switch utilizing a thermo-optical effect is used for the drop optical switch 10 and the add optical switch 20, a high degree of freedom can be imparted to setting of a switching operation, thus enabling a smooth switching operation or a switching operation of a switch having a large time constant. The time constant $t_0$ of switching operation of the drop optical switch 10 and switching operation of add optical switch 20 is set to be larger than the response time $t_1$ of an AGC (automatic gain control) function usually provided for the optical amplifiers 2 and 7 as well as for the optical receiver 7. In other words, the operation speed of the switch is made slower than the response speed of the AGC function, whereby the AGC functions of the optical amplifiers 2 and 7 and the AGC function of the optical receiver 7 can absorb variations in optical power, which would be caused by reconstruction of an optical path, thus embodying an OADM node device having a stable transmission characteristic.

(Second Embodiment)

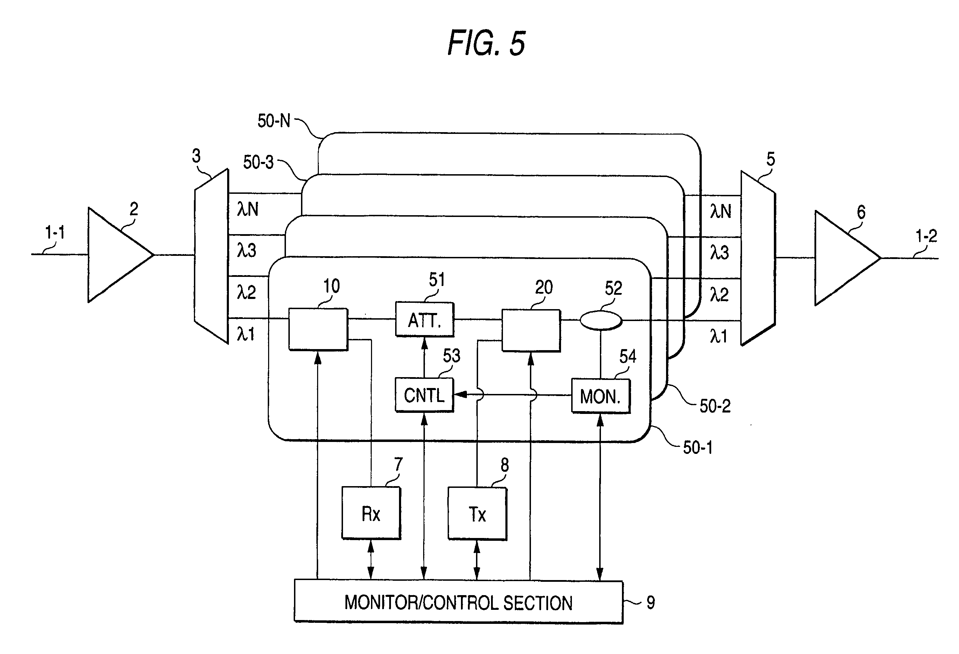

FIG. 5 shows a further exemplary OADM node device. In the drawing, like reference numerals designate like elements, and repetition of their explanations is omitted.

In the present embodiment, optical add/drop circuits 50-1 to 50-N are embodied by each of the optical add/drop circuits 4-1 to 4-N of the first embodiment being additionally provided with a variable optical attenuator 51, an optical coupler 52, an attenuator control section 53, and a monitor section 54.

A portion of the optical signal output from the add optical switch 20 is branched by the optical coupler 52 and is input to the monitor section 54. The monitor section 54 detects the level of power of the optical signal output from the add optical switch 20 and outputs to the attenuator control section 53 a signal corresponding to the detected power level. In accordance with a control signal output from the monitor and control section 9 or a control signal output from the monitor section 54, the attenuator control section 53 controls the attenuation of the variable optical attenuator 51.

More specifically, at the time of a dropping operation of the drop optical switch 10, the attenuator control section 53 is controlled by the monitor and control section 9 such that the attenuation of the variable optical attenuator 51 assumes a value sufficiently higher than a predetermined value. Even in the event that the drop optical switch 10 enters a through state as a result of occurrence of a failure in the drop optical switch 10, as described in FIG. 2, the optical signal which has passed through the drop optical switch 10 is blocked by the variable optical attenuator 51, by setting the attenuation of the variable optical attenuator 51 to a sufficiently high level.

Even if a failure arises in the add optical switch 20 at this time and the add optical switch 20 is brought into a through state, no optical signal is output from any one of the optical add/drop circuits 50-1 to 50-N. Even in the event of failures occurring in both the drop optical switch 10 and the add optical switch 20, leakage of an optical signal from the optical add/drop circuits 50-1 to 50-N can be prevented, thus enabling establishment of a highly reliable network.

When the drop optical switch 10 and the add optical switch 20 are in a through state, the attenuator control section 53 controls the attenuation of the variable optical attenuator 51 such that the optical signal which has passed through the drop optical switch 10 and the add optical switch 20 becomes constant, in accordance with a signal output from the monitor section 54. Accordingly, the OADM node device can cope with fluctuations in the power of an optical signal, which would be caused by a variation in the number of wavelengths, thus attaining a stable transmission characteristic.

During the through operation of the drop optical switch 10 and the through operation of the add optical switch 20, in the event that the attenuation of the variable optical attenuator 51 becomes lower than a predetermined value when the attenuator control section 53 controls the attenuation of the variable optical attenuator 51 in accordance with a signal output from the monitor section 54, the attenuator control section 53 outputs an anomaly signal to a monitor and control section 9. The monitor section 54 monitors the level of power of the optical signal output from the optical transmitter 8 during the adding/dropping operation of the optical add/drop circuits 50-1 to 50-N. If the power level of the optical signal drops to a predetermined level, the monitor section 54 outputs an anomaly signal to the monitor and control section 9.

Upon receipt of the anomaly signal, the monitor and control section 9 performs a control operation for switching an optical transmission path from a working line to a protection line, thus working around the optical path from which the anomaly signal originates. Thus, a failure in an OADM node device is presented before it actually occurs, thereby improving the reliability of the network to a much greater extent.

Although in the foregoing description the monitor section 54 detects only the level of optical power, the monitor section 54 may monitor another transmission characteristic. The most important parameter of a transmission characteristic is a bit error rate. A method of directly measuring a bit error rate requires a longer period of time as an optical signal becomes longer in bit length. Therefore, measuring a bit error rate in a short period of time through use of an indirect method of some kind is desirable.

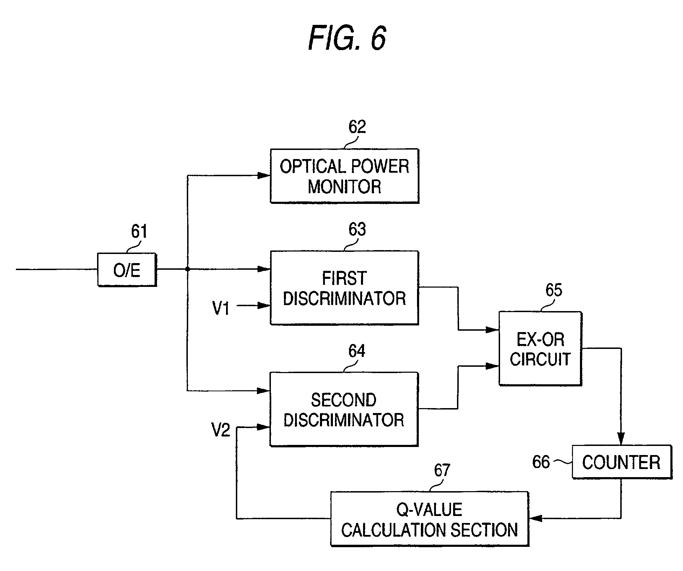

FIG. 6 shows an example configuration of the monitor section 54 capable of determining a bit error rate in a short period of time. The optical signal which has entered the monitor section 54 is converted into an electrical signal by a photoelectric convertor 61. An output terminal of the photoelectric convertor 61 is trifurcated into three branches; namely, one branch is connected to an optical power monitor 62, another is connected to a first discriminator 63, and the other is connected to a second discriminator 64. The power monitor 62 detects the level of power of the optical signal received by the monitor section 54. The first discriminator 63 discriminates data in accordance with a fixed discrimination level V1, and the second discriminator 64 discriminates data in accordance with a discrimination level V2 output from a Q-value calculation section 67.

A signal output as a result of discrimination performed by the first discriminator 63 and a signal output as a result of discrimination performed by the second discriminator 64 are input to an exclusive OR circuit 65. The exclusive OR circuit 65 outputs a pulse signal to a counter 66 only when there exists a difference between the results of discrimination performed by the first and second discriminators 63 and 64. The counter 66 counts the number of pulse signals output from the exclusive OR circuit 65 and outputs the result of counting operation to the Q-value calculation section 67.

The Q-value calculation section 67 changes a discrimination level V2 to be output to the second discriminator 64 and reads the value of the signal output from the counter 66, thus calculating a Q value. As is well known in the art, a Q value is expressed by $Q = (\mu_1 - \mu_0)/(\sigma_1 + \sigma_0)$, provided that the amplitude of an optical signal at level 1 is taken as $\mu_1$, the dispersion of the signal at level 1 is taken as $\sigma_1$, the amplitude of an optical signal at level 0 is taken as $\mu_0$, and the dispersion of the signal at level 0 is taken as $\sigma_0$. The Q value corresponds to a bit error rate (BER) in substantially a one-to-one relationship. The bit error rate of an optical signal output from the OADM node device can be estimated in a short period of time by calculation of a Q value.

So long as the bit error rate of each node is estimated through calculation of a Q value, a section between nodes where an optical signal is deteriorated can be located, thereby shortening the time required to recover from a network failure. Thus, the efficiency of utilization of the network can be improved.

(Third Embodiment)

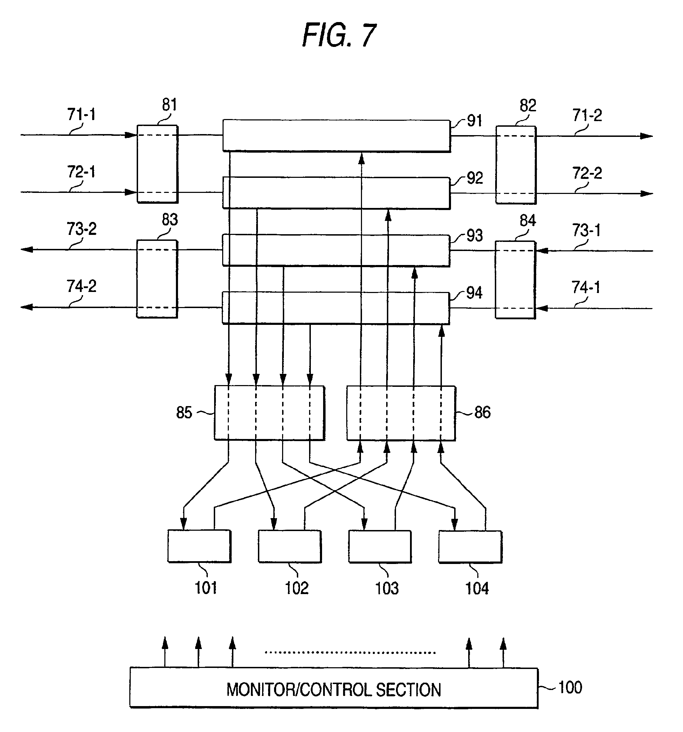

FIG. 7 is a schematic diagram showing the configuration of an OADM node device according to a first embodiment of the present invention.

A wavelength-multiplexed optical signal which has been transmitted over a clockwise optical transmission path (a working system) 71-1 disposed on the incoming side of the OADM node device enters an optical add/drop circuit 91 by way of a two-input/two-output optical path changeover switch 81. After an optical signal of specific wavelength has been added to or dropped from the wavelength-multiplexed optical signal, the resultant optical signal is output to a clockwise optical transmission path (a working system) 71-2 disposed at the outgoing side of the OADM node device, by way of a two-input/two-output optical path changeover switch 82. A wavelength-multiplexed optical signal which has been transmitted over a clockwise optical transmission path (a protection system) 72-1 enters an optical add/drop circuit 92 by way of the two-input/two-output optical path changeover switch 81. After an optical signal of specific wavelength has been added to or dropped from the wavelength-multiplexed optical signal, the resultant optical signal is output to a clockwise optical transmission path (a protection system) 72-2 disposed at the outgoing side of the OADM node device, by way of the two-input/two-output optical path changeover switch 82.

A wavelength-multiplexed optical signal which has been transmitted over a counterclockwise optical transmission path (a working system) 73-1 enters an optical add/drop circuit 93 by way of a two-input/two-output optical path changeover switch 84. After an optical signal of specific wavelength has been added to or dropped from the wavelength-multiplexed optical signal, the resultant optical signal is output to a counterclockwise optical transmission path (a working system) 73-2, by way of a two-input/two-output optical path changeover switch 83. A wavelength-multiplexed optical signal which has been transmitted over a counterclockwise optical transmission path (a protection system) 74-1 enters an optical add/drop circuit 94 by way of the two-input/two-output optical path changeover switch 84. After an optical signal of specific wavelength has been added to or dropped from the wavelength-multiplexed optical signal, the resultant optical signal is output to a counterclockwise optical transmission path (a protection system) 74-2, by way of the two-input/two-output optical path changeover switch 83.

Here, the optical transmission paths 71-1, 71-2, 72-1, 72-2, 73-1, 73-2, 74-1, and 74-2 constitute a ring-shaped network. Each of the optical add/drop circuits 91 to 94 may assume the configuration as shown in any one of FIGS. 1 through 5 or may assume the configuration of a known optical add/drop circuit.

The optical signal which has been dropped by the optical add/drop circuit 91 enters an optical transceiver (a working system) 101 by way of a four-input/four-output optical path changeover switch 85, and the optical signal which has been dropped by the optical add/drop circuit 92 enters an optical transceiver (a protection system) 102 by way of the four-input/four-output optical path changeover switch 85. The optical signal which has been dropped by the optical add/drop circuit 93 enters an optical transceiver 103 (a working system) by way of the four-input/four-output optical path changeover switch 85. The optical signal which has been dropped by the optical add/drop circuit 94 enters an optical transceiver 104 (a protection system) by way of the four-input/four-output optical path changeover switch 85. By way of a four-input/four-output optical path changeover switch 86, the optical signal output from the optical transceiver 101 enters the optical add/drop circuit 91, where the optical signal is added to the wavelength-multiplexed optical signal. By way of the four-input/four-output optical path changeover switch 86, the optical signal output from the optical transceiver 102 enters the optical add/drop circuit 92, where the optical signal is added to the wavelength-multiplexed optical signal. By way of the four-input/four-output optical path changeover switch 86, the optical signal output from the optical transceiver 103 enters the optical add/drop circuit 93, where the optical signal is added to the wavelength-multiplexed optical signal. By way of the four-input/four-output optical path changeover switch 86, the optical signal output from the optical transceiver 104 enters the optical add/drop circuit 94, where the optical signal is added to the wavelength-multiplexed optical signal. A monitor and control section 100 controls the optical path changeover switches 81 to 84 and the optical add/drop circuits 91 to 94.

As in the case of the drop optical switch 10 and the add optical switch 20 employed in the previous embodiments, a switch utilizing a thermo-optic effect or an acousto-optic effect is used for the optical path changeover switches 81 to 84. The time constants of switching operations of the optical path changeover switches 81 to 84 may be set to be larger than the response time of AGC functions of optical amplifiers inserted into the optical transmission paths or the response time of AGC functions of optical receivers of the optical transceivers 101 to 104, thus preventing occurrence of an optical surge, which would otherwise be caused by a switching operation, and making a transmission characteristic stable.

The operation of the OADM node device of the present embodiment will now be described, provided that the optical path changeover switches 81 to 84 are usually in the state designated by broken lines shown in FIG. 7.

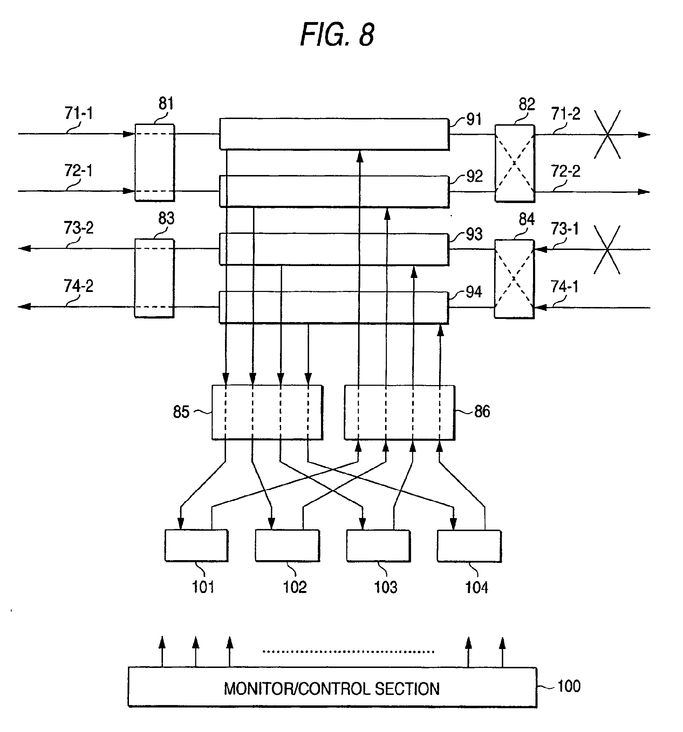

FIG. 8 shows an operation for avoiding failures by means of switching between optical paths in the event that failures (designated by cross signs in the drawing) arise in the outgoing optical transmission path (a working system) 71-2 and the incoming optical transmission path (a working system) 73-1.

In this case, the optical path changeover switch 82 for effecting switching between the clockwise optical transmission path (a working system) 71-2 and the clockwise optical transmission path (a protection system) 72-2, which are disposed on the outgoing side of the OADM node device, is changed to a crosswise state such as that shown in FIG. 8. Further, an unillustrated optical path changeover switch for effecting switching between the clockwise optical transmission path (a working system) 71-1 and the clockwise optical transmission path (a protection system) 72-1, which are disposed at the incoming section of an OADM node device on the subsequent stage, is switched, thereby avoiding the failure that has arisen in the optical transmission path 71-2.

The optical path changeover switch 84 for effecting switching between the counterclockwise optical transmission path (a working system) 73-2 and the counterclockwise optical transmission path (a protection system) 74-2, which are disposed on the outgoing side of the OADM node device, is changed to a cross-connection state such as that shown in FIG. 8. Further, an unillustrated optical path changeover switch for effecting switching between the counterclockwise optical transmission path (a working system) 73-1 and the counterclockwise optical transmission path (a protection system) 74-1, which are disposed at the outgoing section of an OADM node device at the preceding stage, is caused to perform a switching operation, thereby avoiding the failure that has arisen in the optical transmission path 73-1.

As mentioned above, in the event of a failure arising in an optical transmission path (a working system), switching to an optical transmission path (a protection system) is effected by means of an optical path changeover switch, thereby avoiding the failure and improving the reliability of the network. A failure can be avoided by means of switching between the optical transmission paths within a section between only the nodes where a failure has arisen, thus facilitating a changeover control operation and curtailing node costs.

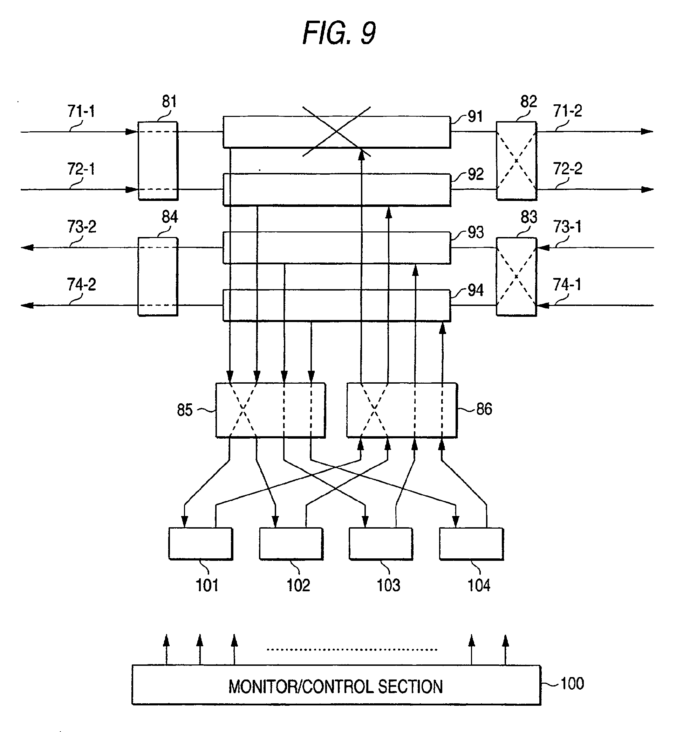

FIG. 9 shows an operation for avoiding a failure by means of switching between optical transmission paths in the event that a failure arises in a working optical add/drop circuit; for example, the optical add/drop circuit 91 (indicated by a cross sign).

The optical signal which has been transmitted over the optical transmission path (a working system) 71-1 is input to the optical add/drop circuit 92 rather than to the optical add/drop circuit 91 where a failure has arisen, by changing the optical path changeover switch 81 to a cross connection state. The optical signal dropped by the optical add/drop circuit 92 enters the optical transceiver 101 by means of a switching operation of the optical changeover switch 85.

The optical signal output from the optical transceiver 101 enters the optical add/drop circuit 92 by means of switching between optical transmission paths effected by the optical changeover switch 86. Further, the optical signal is output to the optical transmission path 71-2 by way of the optical path changeover switch 82 that remains in a cross-connection state.

In the event that a failure arises in a working optical add/drop circuit, the failure can be avoided by means of a switching operation performed in only the OADM node device where the failure has arisen. Even in this case, a changeover control operation is facilitated, and node cost can be reduced.

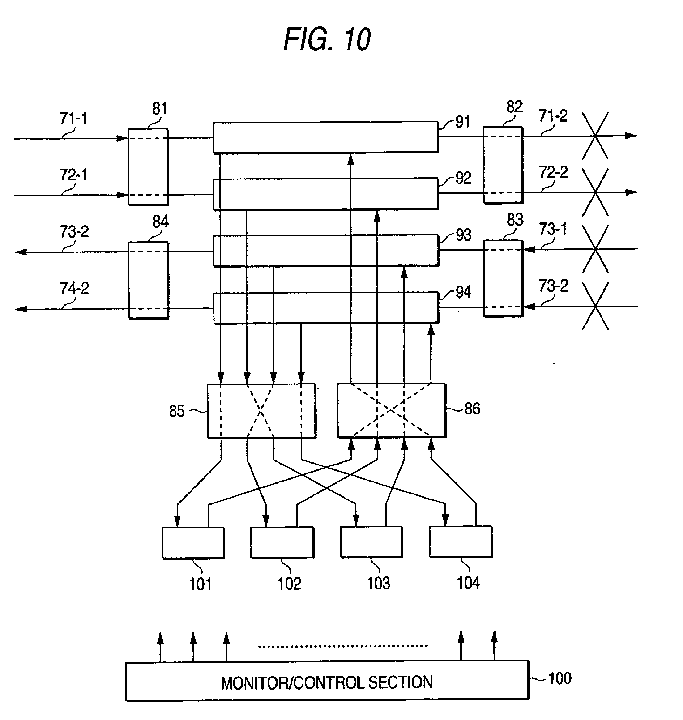

FIG. 10 shows an operation for avoiding failures by means of switching between optical transmission paths in the event that failures arise in both working optical transmission paths and protection optical transmission paths. In this case, the failure can be avoided by means of switching operations of the optical path changeover switches 85 and 86.

The optical signal output from the optical transceiver 101 is delivered to the optical transmission path (a protection system) 74-2, by way of the optical add/drop circuit 94 and by means of the optical path changeover switch 86. Specifically, the optical signal is transmitted to a desired OADM node device by way of the counterclockwise optical transmission path (a protection system) 74-2 whose direction of transmission is opposite that of the clockwise optical transmission path (a working system) 71-2. At this time, switching between the optical transmission path (a working system) 71-2 to the optical transmission path (a protection system) 74-2 is effected even at a receiving end, thus continuing communication.

The optical signal which would originally be transmitted over the counterclockwise optical transmission path (a working system) 73-1 is transmitted from a transmission end by way of the clockwise optical transmission path 72-1 whose direction of transmission is opposite that of the optical transmission path 73-1. The optical signal dropped by the optical add/drop circuit 92 is delivered to the optical transceiver 103 by means of the optical path changeover switch 85.

Even in the event that failures arise in both the working optical transmission paths and the protection optical transmission paths, there is performed switching to protection optical transmission paths whose directions of transmission are opposite those of the original optical transmission paths, by means of optical path changeover switches, thus enabling avoidance of failures and improving the reliability of the network.

Although in the present embodiment explanation has been given of failures arising in the transmission paths, failures can be avoided by means of the same control operation as that described previously, even in the event that a communications path is interrupted by a failure arising in the OADM mode between the receiving end and the transmission end.

In the first embodiment, the working optical transmission paths and the protection optical transmission paths are provided at a 1:1 ratio. They may be provided at an n:(n-m) ratio, where "n" designates an integer of 2 or greater and "m" designates an integer of 1 or greater.

(Second Embodiment)

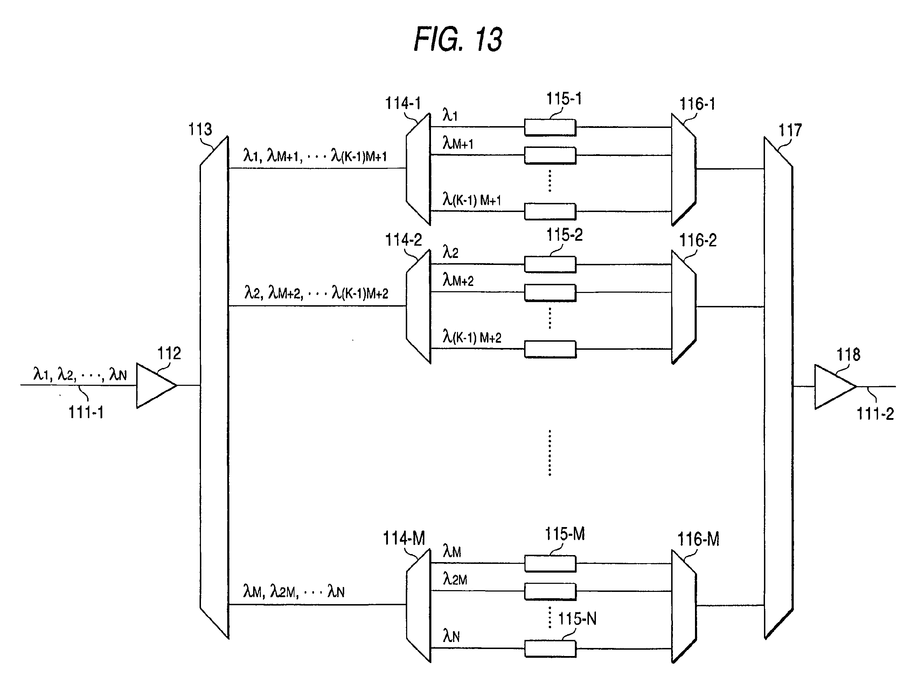

FIG. 13 shows an OADM node device according to a second embodiment of the present invention. The OADM node device is to be disposed in each of nodes of a ring-shaped WDM light-wave network having at least a pair of optical fiber transmission paths which transmit optical signals in opposite directions. The OADM node device has the function of adding/dropping an optical signal of specified wavelength.

In the second embodiment, an optical signal is switched on each bundle (or group) of wavelengths rather than according to wavelength. A wavelength-multiplexed optical signal (including wavelengths $\lambda_1$, $\lambda_2$, ..., $\lambda_N$) which has N channels and has been transmitted over an optical transmission path 111-1 is amplified by an optical amplifier 112, and a first optical demultiplexer 113 divides the thus-amplified wavelength-multiplexed optical signal into M wavelength groups, each group being assigned K channels (KM=N). Here, a difference in optical frequency (interval) between adjacent channels is taken as $\Delta f$, and an arrayed waveguide grating (AWG) type optical demultiplexer/multiplexer having an $\Delta f$xM free spectrum range is employed as the first optical demultiplexer 113. The wavelength-multiplexed optical signal is divided into wavelength groups such as those provided below.

Wavelength Group 1: $\lambda_1$, $\lambda_{M+1}$, ..., $\lambda_{(K+1)M+1}$

Wavelength Group 2: $\lambda_2$, $\lambda_{M+2}$, ..., $\lambda_{(K-1)M+2}$

... ... ...

Wavelength Group M: $\lambda_M$, $\lambda_{M+2}$, ..., $\lambda_{(KM)(=N)}$

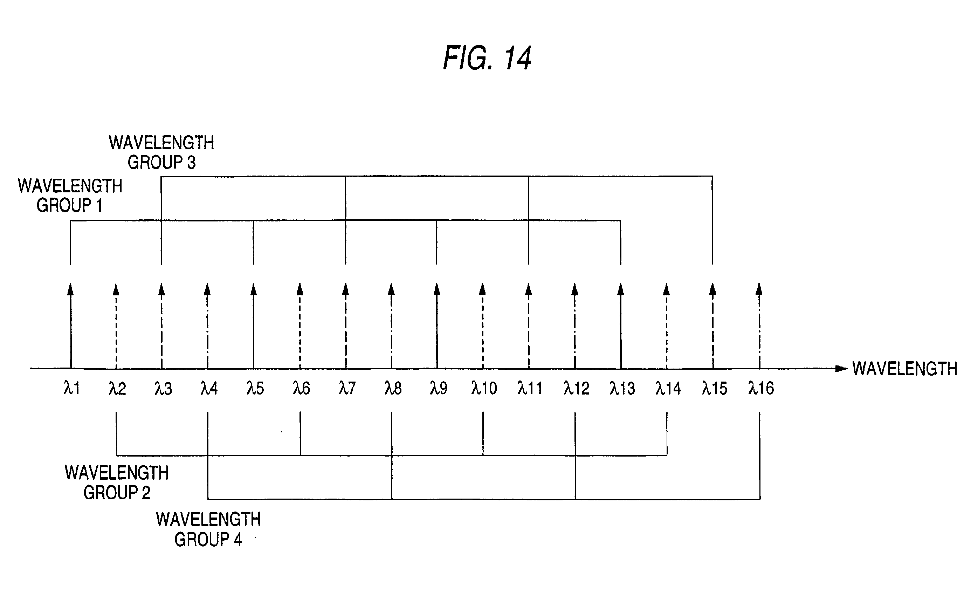

FIG. 14 shows an example in which M=4 and K=4. As is obvious from FIG. 14, a channel is set every M intervals within each wavelength group, and hence there is no necessity for setting a guard band between adjacent wavelengths in each wavelength group. Consequently, the efficiency of bandwidth utilization can be maximized.

The optical demultiplexer 113 peridocically divides the wavelength-multiplexed optical signal (including wavelengths $\lambda_1$, $\lambda_2$, ..., $\lambda_N$) into M wavelength groups. The thus-divided wavelengths are input to corresponding second optical demultiplexers 114-1, 114-2, ..., 114-M. More specifically, the wavelength groups 1 through M are input to the corresponding second optical demultiplexers 114-1 to 114-M. In each of the second optical demultiplexers 114-1 to 114-M, the wavelength groups into which the wavelength-multiplexed optical signal has been divided by the optical demultiplexer 114 are separated according to wavelength. Optical signals into which the wavelength group is separated according to wavelength by the second optical demultiplexer 114-1 are input to optical add/drop circuits 115-1 to 115-(K-1)M+1; optical signals in which the wavelength group is separated according to wavelength by the second optical demultiplexer 114-2 are input to optical add/drop circuits 115-2 to 115-(K-1)M+2; ...; and optical signals in which the wavelength group is separated according to wavelength by the M$^{th}$ optical demultiplexer 114-M are input to optical add/drop circuits 115-M to 115-N. Each of the optical add/drop circuits 115-1 to 115-N drops or adds only a desired optical signal and permits passage of the remaining optical signals. A two-input/two-output optical switch is used for the optical add/drop circuits 115-1 through 115-N. The signals output from the optical add/drop circuits 115-1 through 115(K-1)M+1 enter a second optical multiplexer 116-1, where the signals are multiplexed; the signals output from the optical add/drop circuits 115-2 through 115(K-1)M+2 enter a second optical multiplexer 116-2, where the signals are multiplexed; ...; and the signals output from the optical add/drop circuits 115-M through 115-N enter a second optical multiplexer 116-M, where the signals are multiplexed. Consequently, the wavelength groups 1 through M are again constituted. The optical signals output from the second optical multiplexers 116-1 through 116-M are multiplexed by a first optical multiplexer 117. The thus-multiplexed optical signal is amplified by an optical amplifier 118 and is transmitted to the next OADM node device by way of the optical transmission path 111-2. An arrayed waveguide grating (AWG)-type optical demultiplexer/multiplexer having the same functions as those of the first optical demultiplexer 113 is used as the first optical multiplexer 117. As a result, the wavelength groups are again multiplexed into a wavelength-multiplexed optical signal having N channels.

Difficulty encountered in connecting the OADM node devices in the form of multistage connection corresponds to narrowing of a transmission bandwidth of the OADM node device and occurrence of coherent cross-talk. In the second embodiment, an interval between adjacent channels of an optical signal input to the OADM node device assumes a value $\Delta f$, and an interval between adjacent channels in each of the wavelength groups into which the wavelength-multiplexed optical signal is divided by the first optical demultiplexer 113 assumes a value $\Delta f$xM. The transmission bandwidth for the second optical demultiplexers 114-1 to 114-M and that for the second optical multiplexers 116-1 to 116-M can be set to be sufficiently broader than the transmission bandwidth for the first optical demultiplexer 113 and that for the first optical multiplexer 117. Therefore, even when OADM node devices are connected in the form of multistage connection, the second optical demultiplexers 114-1 to 114-M and the second optical multiplexers 116-1 to 116-M do not induce narrowing of a transmission bandwidth of the OADM node device.

Deterioration in the transmission characteristic of an OADM node device stemming from coherent cross-talk is approximated by the following equation.

$$\mathtt{Pe ~=~ 5log(1-4Q^2L\varepsilon) ~\dots~ (1)}$$

Parameters of Eq-(1) are defined as follows:

Q: Q value required for a certain bit error rate,
L: the number of optical paths which induce coherent cross-talk, and
$\varepsilon$: the volume of coherent cross-talk arising in one optical path

The deterioration in the transmission characteristic of the OADM node device is given as a function of L and $\varepsilon$. In the second embodiment, the transmission bandwidth for the second optical demultiplexers 114-1 to 114-M and that for the second optical multiplexers 116-1 to 116-M are set so as to be about three times the optical frequency $\Delta$f. Provided that the total volume of cross-talk arising in the first optical demultiplexer 113, the first optical multiplexer 117, the second optical demultiplexers 114-1 to 114-M, and the second optical multiplexers 116-1 to 116-M is taken as C, the volume of coherent cross-talk L$\varepsilon$ per node at a specific wavelength is expressed by the following equation.

$$\mathtt{L\varepsilon=(K+1)C^2 ~+~ (N-K-1)C^4 ~\dots~ (2)}$$

Since the volume of cross-talk is proportional to the fourth power of C, the second term on the right side of Eq-(2) is negligible when compared to the first term. In the second embodiment, the number of optical paths per node which induce coherent cross-talk can be reduced so as to be approximately equal to the number of wavelengths pertaining to each of the wavelength groups.

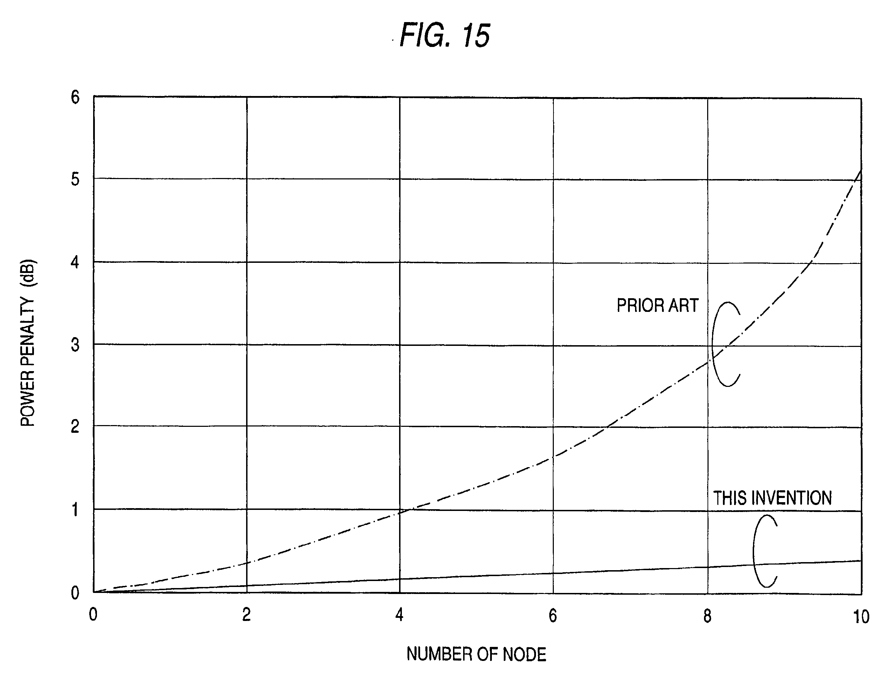

FIG. 15 shows the amount of deterioration in the transmission characteristic of the OADM node device stemming from coherent cross-talk at a bit error rate of $10^{-9}$, provided that the volume of cross-talk C = 3 x $10^{-3}$ (=-25 dB), N = 64, and K = 8. In the case of the known OADM node device, the number of optical paths per node which induce coherent cross-talk is roughly proportional to the total number of wavelengths multiplexed into an optical signal. After the optical signal has been transmitted through ten OADM node devices, a deterioration of 5dB or more arise in the optical signal. In contrast, the number of optical paths per node which induce coherent cross-talk can be reduced so as to be approximately equal to the number of wavelengths pertaining to each of the wavelength groups. Even after an optical signal has been transmitted through ten OADM node devices, the resultant deterioration can be reduced to about 0.3 dB.

In the second embodiment, a wavelength-multiplexed optical signal is divided into wavelength groups, and operations, administration, and maintenance (hereinafter referred to simply as "OAM") of a light-wave network can be performed on a per-wavelength-group-basis. Accordingly, the OAM of the light-wave network can be facilitated. Further, the light-wave network can be expanded on a per-wavelength-group basis, as required, thus ensuring scalability.

(Third Embodiment)

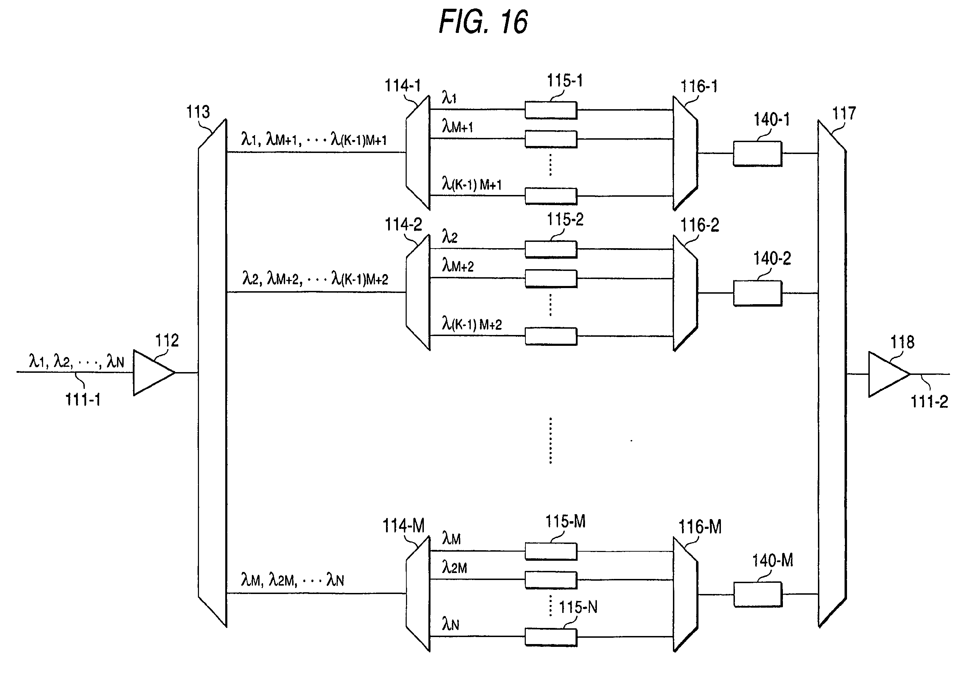

FIG. 16 shows a third embodiment of the present invention. In the drawing, those elements which are the same as those shown in FIG. 13 are assigned the same reference numerals, and repetition of their explanations is omitted.

The wavelength groups multiplexed by the second optical multiplexer 116-1 enter an optical attenuator 140-1; the wavelength groups multiplexed by the second optical multiplexer 116-2 enter an optical attenuator 140-2; ...; and the wavelength groups multiplexed by the second optical multiplexer 116-M enter an optical attenuator 140-M. The attenuation of the optical attenuators 140-1 to 140-M is set so as to compensate for variations in insertion loss occurring in the first optical demultiplexer 113 and variations in the insertion loss occurring in the first optical multiplexer 117 with respect to each of the wavelength groups. The optical signals output from the optical attenuators 140-1 to 140-M enter the first optical multiplexer 117.

As mentioned above, the number of optical attenuators can be significantly diminished by means of controlling the level of optical power for each wavelength group, thus reducing node cost and the scale of the OADM node.

In the previous description, optical attenuators are interposed between the first and second optical multiplexers, but the same advantageous effects can be achieved even when optical attenuators are interposed between the first and second optical demultiplexers.

While optical signals output from the second optical multiplexers are monitored, the attenuation of optical attenuators may be controlled so as to reduce a difference between losses in the wavelength groups.

(Fourth Embodiment)

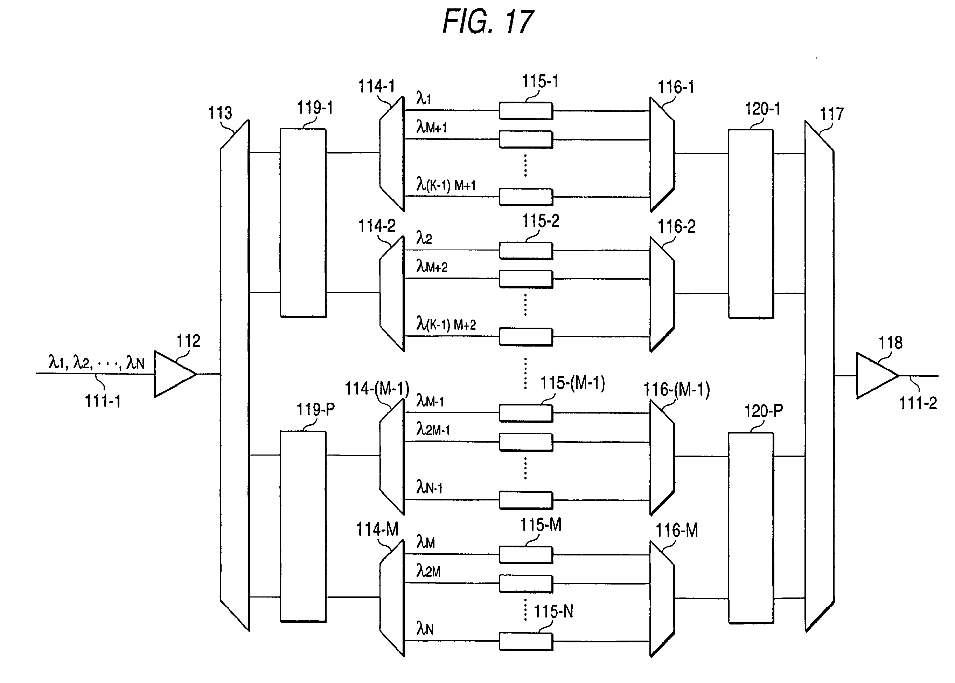

FIG. 17 shows a fourth embodiment of the present invention. In the drawing, those elements which are the same as those shown in FIG. 13 are assigned the same reference numerals, and repetition of their explanations is omitted.

Of the M wavelength groups (M is an even number) into which a wavelength-multiplexed optical signal is divided by the first optical demultiplexer 3, odd-numbered wavelength groups are assigned to a working system, and even-numbered wavelength groups are assigned to a protection system. More specifically, a wavelength group 1 is assigned to a working system, and a wavelength group 2 is assigned to a protection system of the wavelength group 1. Further, a wavelength group 3 is assigned to a working system, and a wavelength group 4 is assigned to a protection system of the wavelength group 3. Two adjacent wavelength groups are input to each of two-input/two-output first optical switches 119-1 to 119-P (P=M/2). For example, wavelength groups 1 and 2 enter a first optical switch 119-1; wavelength groups 3 and 4 enter a first optical switch 119-2; ...; and wavelength groups M-1 and M enter a first optical switch 119-P. The wavelength groups output from each of the first optical switches 119-1 to 119-P enter corresponding second optical demultiplexers 114-1 to 114-M. The demultiplexing characteristics of the second optical demultiplexers 114-1 to 114-M are set to be able to output two adjacent wavelengths from their respective output ports. For example, the demultiplexing characteristics of the second optical demultiplexers 114-1 and 114-2 are set to be able to output wavelengths of λ1 and λ2 from their first output ports. Further, the demultiplexing characteristics of the second optical demultiplexers 114-3 and 114-4 are set to be able to output wavelengths of λ3 and λ4 from their first output ports.

Similarly, the multiplexing characteristics of the second optical multiplexers 116-1 to 116-M are set to be able to pass two adjacent wavelengths from each input port to an output port.

Two adjacent wavelength groups output from the second optical multiplexers 116-1 and 116-2 enter a two-input/two-output second optical switch 120-1; ... and two adjacent wavelength groups output from the second optical multiplexers 116-(M-1) and 116-M enter a two-input/two-output second optical switch 120-P. Signals output from the respective second optical switches 120-1 to 120-P enter the first optical multiplexer 117.

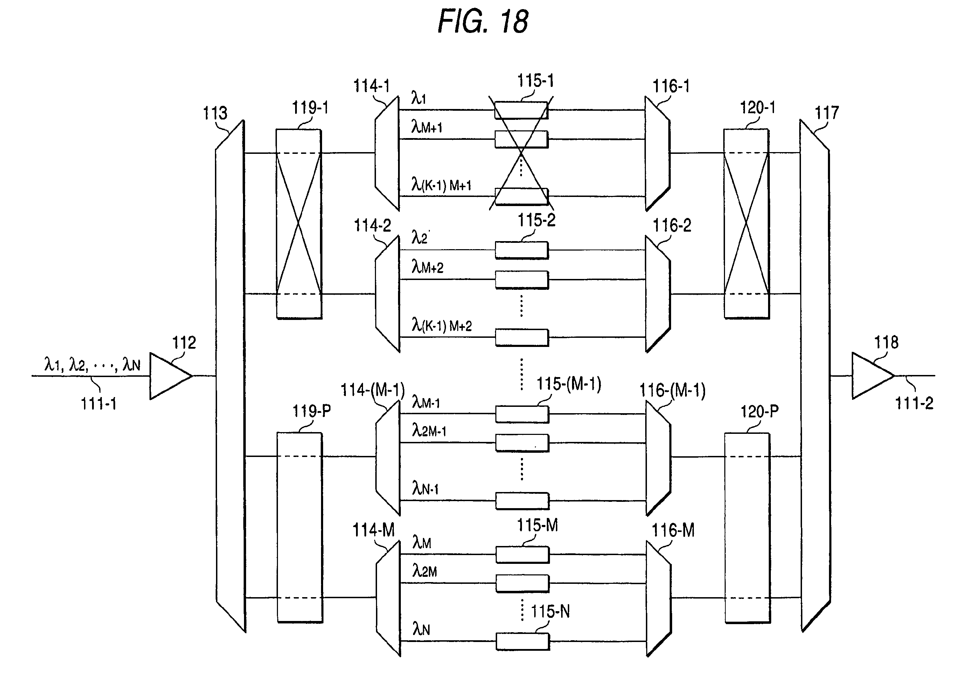

FIG. 18 shows the operation of the OADM node device performed in the event that failures arise in the optical add/drop circuits 115-1 to 115-(K-1)M+1 corresponding to the wavelength group 1 (serving as a working system). After wavelength groups have been separated according to wavelength, a portion of each of the wavelengths is tapped, thereby monitoring optical power and a Q value. In a normal operating state, the first optical switch 119-1 and the second optical switch 120-1 are in a state designated by dotted lines. In contrast, in the event of occurrence of a failure, the first and second optical switches 119-1 and 120-1 are brought into a cross-connection state designated by solid lines. By means of the change in the connection state of the optical switch 119-1 and in the connection state of the optical switch 120-1, the transmission direction of the wavelength group 1 is switched from the optical add/drop circuits where failures have arisen to the second optical demultiplexer 114-2. Since the second optical demultiplexer 114-2 is set so as to be able to output either of two adjacent wavelengths, the wavelength group 1 is divided according to wavelength by the second optical demultiplexer 114-2. Further, the second optical multiplexer 116-2 is set so as to be able to output either of two adjacent wavelengths, as is the second optical demultiplexer 114-2. Accordingly, the wavelength group 1 is reconstructed in the second optical multiplexer 116-2. The optical signal output from the second optical multiplexer 116-2 enters the second optical switch 120-1, where the transmission direction of the optical signal is switched to a predetermined input port of the first optical multiplexer 117.

As mentioned above, in the fourth embodiment, adjacent wavelength groups are assigned to a working system and a protection system, respectively, thereby readily constructing a system of 1:1 redundancy. Accordingly, there can be provided a highly reliable OADM node device. Since switching is effected between wavelength groups, the number of optical switches can be greatly diminished, thus curtailing the cost of a light-wave network. Further, a failure-recovery operation is performed in a closed state within a single OADM node device, thus facilitating the OAM of a light-wave network.

(Fifth Embodiment)

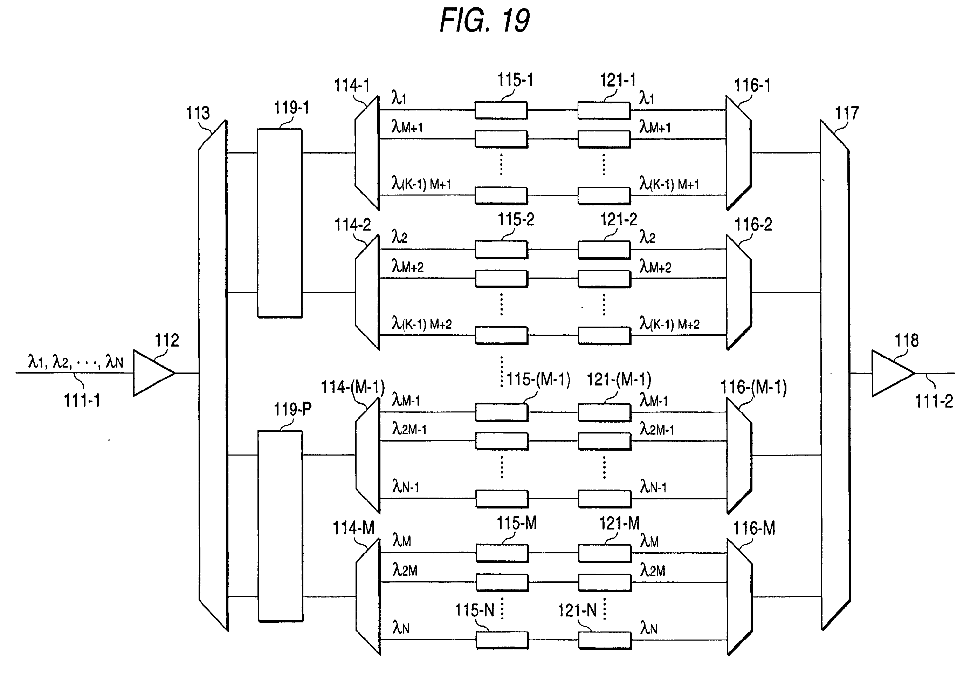

FIG. 19 shows a fifth embodiment of the present invention. In the drawing, those elements which are the same as those shown in FIG. 17 are assigned the same reference numerals, and repetition of their explanations is omitted.

In the case of long-distance transmission, such as that employed in a submarine transmission system, each of node devices performs regenerative relay of an optical signal in order to maintain the signal-to-noise ratio of the optical signal in a good condition. The optical signals output from the optical add/drop circuits 115-1 to 115-N enter corresponding regenerative repeaters 121-1 to 121-N. Each of the regenerative repeaters 121-1 to 121-N converts an input optical signal into an electrical signal. After the electrical signal is discriminated by a discriminator in the regenerative repeater, the thus-discriminated electrical signal is converted into an optical signal of specific wavelength, and the thus-converted optical signal is output. The optical signals output from the regenerative repeaters 121-1 to 121-N enter the corresponding second optical multiplexers 116-1 to 116-M, where the optical signals are multiplexed, thus reconstructing respective wavelength groups.

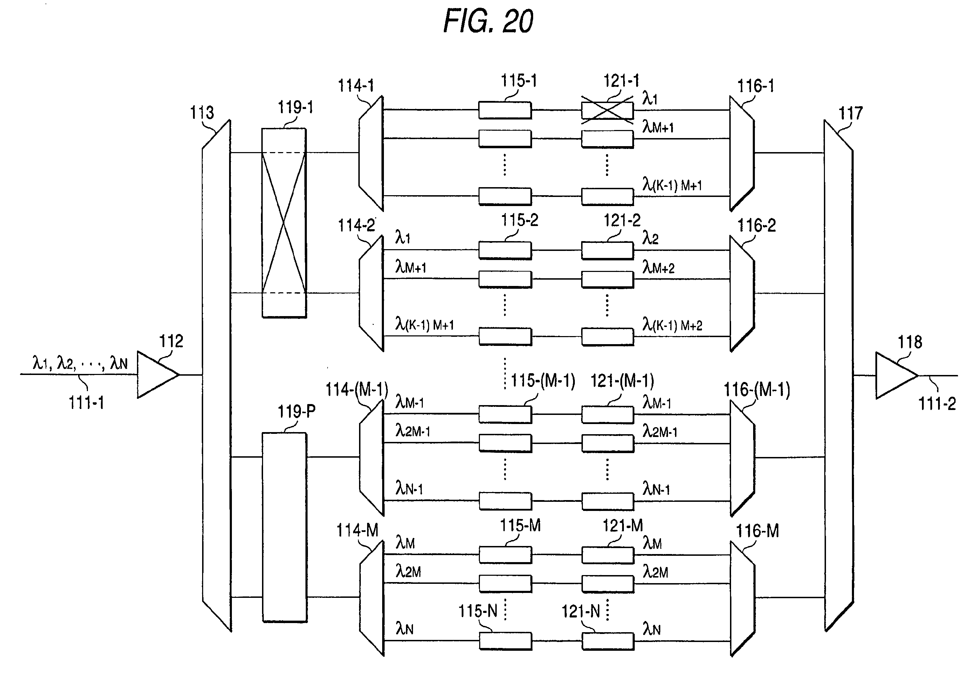

FIG. 20 shows the operation of the OADM node device performed in the event that failures arise in the regenerative repeater 121-1 assigned to the wavelength group 1 (serving as a working system). In a normal operating state, the first optical switch 119-1 is in a state designated by dotted lines. In contrast, in the event of occurrence of a failure, the first optical switch 119-1 is brought into a cross-connection state designated by solid lines. By means of the change in the connection state of the optical switch 119-1, the transmission direction of the wavelength group 1 is switched from the second optical demultiplexer 114-1 to the second optical demultiplexer 114-2. Since the second optical demultiplexer 114-2 is set so as to be able to output either of two adjacent wavelengths, the wavelength group 1 is divided according to wavelength by the second optical demultiplexer 114-2. The optical signals output from the optical add/drop circuits 115-2, 115-(M+2), ..., 115-(K-1)M+1 enter corresponding regenerative repeaters 121-2, 121-(M+2), ..., 121-(K-1)M+2. In the respective regenerative repeaters 121-2, 121-(M+2), ..., 121-(K-1)M+2, the input optical signals are converted into optical signals allocated corresponding wavelengths $\lambda_2$, $\lambda_{M+2}$, ..., $\lambda_{(K-1)M+2}$, and the thus-converted optical signals are output. The optical signals output from the regenerative repeaters 121-2 to 121-(K-1)M+2 are sent to the optical transmission path 111-2 by way of the second optical multiplexer 116-2 and the first optical multiplexer 117. As a result of occurrence of a failure in the regenerative repeater 121-1, the wavelength group 1 (serving as a working system) is converted into the wavelength group 2 (serving as a protection system) and is sent to an OADM node device at the subsequent stage. In the subsequent OADM node device, the first optical switch 119-1 in which the wavelength groups 1 and 2 are to be input is brought into a cross-connection state, thereby recovering an optical signal of original wavelength from the optical signal that has been wavelength-converted in the OADM node device at the preceding stage.

In the fifth embodiment, a protection function is attained through cooperative operation between adjacent OADM node devices, thereby diminishing the number of optical switches to be provided within an OADM node device and reducing node costs.

In the above description, a protection function is attained through cooperative operation between adjacent OADM node devices. However, as already mentioned in connection with the fifth embodiment, the optical signals output from the second optical multiplexers 116-1 to 116-M may be input to the corresponding second optical switches 120-1 to 120-P such that the two optical signals output from every set of two adjacent second optical multiplexers enter a corresponding single two-input/two-output second optical switch. In this case, the regenerative repeaters 121-1 to 121-N are required to possess the function of changing a wavelength. The range within which a wavelength is changed may be approximately equal to an interval between adjacent wavelengths. From the viewpoint of efficient utilization of a bandwidth, the interval between wavelengths recently tends to become narrower, such as 0.8 nm or 0.4 nm. Such a range of change in wavelength can be attained by only a commonly-employed distributed feedback semiconductor laser, by means of adjusting only the operating temperature of the semiconductor laser. Therefore, node cost is prevented from being increased. In the event of occurrence of a failure in an OADM node device, a failure-recovery operation can be carried out in a closed state within the node device, thus facilitating the OAM of a light-wave network.

(Eighth Embodiment)

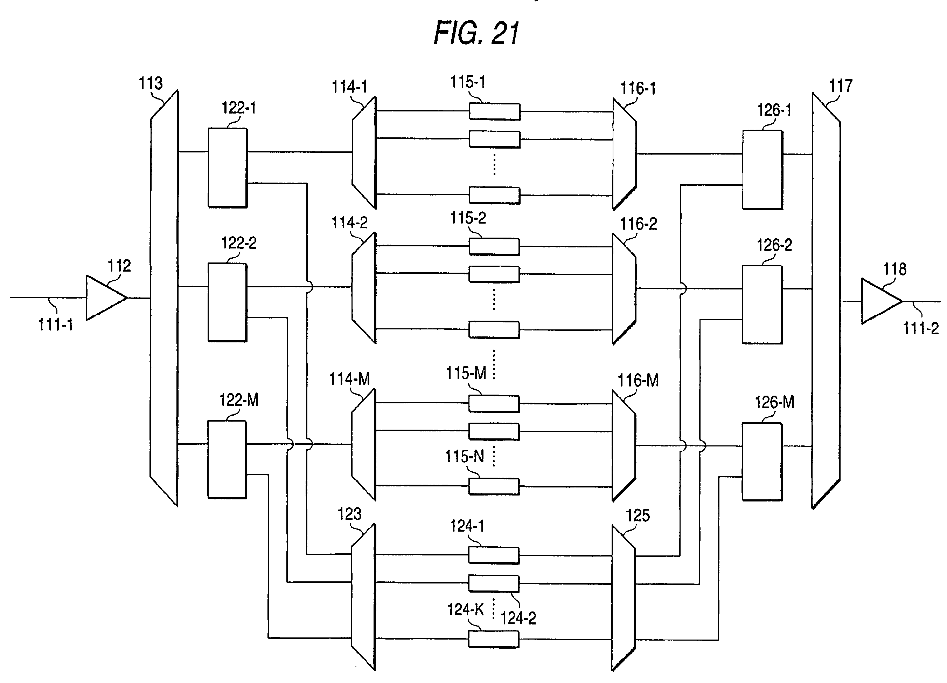

FIG. 21 shows an eighth embodiment of the present invention. In the drawing, those elements which are the same as those shown in FIG. 13 are assigned the same reference numerals, and repetition of their explanations is omitted.

The optical signals output from the first optical demultiplexer 113 enter third optical switches 122-1 to 122-M, each switch having one input port and two output ports. One of the two outputs of the third optical switch 122-1 is input to the second optical demultiplexer 114-1; one of the two outputs of the third optical switch 122-2 is input to the second optical demultiplexer 114-2; ...; and one of the two outputs of the third optical switch 122-M is input to the second optical demultiplexer 114-M. The remaining outputs of the respective third optical switches 122-1 to 122-M are input to corresponding ports of a third optical demultiplexer 123 having M input ports and K output ports. Table 1 shows an input/output characteristic of the third optical demultiplexer 123.

TABLE 1

| | | INPUT PORTS | | | | |
|---|---|---|---|---|---|---|
| | | 1 | 2 | 3 | ....... | M |
| OUTPUT PORTS | 1 | $\lambda_1$ | $\lambda_2$ | $\lambda_3$ | ....... | $\lambda_M$ |
| | 2 | $\lambda_{M+1}$ | $\lambda_{M+2}$ | $\lambda_{M+3}$ | ....... | $\lambda_{2M}$ |
| | 3 | $\lambda_{M+1}$ | $\lambda_{M+2}$ | $\lambda_{M+3}$ | ....... | $\lambda_{3M}$ |
| | ⋮ | ⋮ | ⋮ | ⋮ | ⋮ | ⋮ |
| | K | $\lambda_{(K-1)M+1}$ | $\lambda_{(K-1)M+2}$ | $\lambda_{(K-1)M+3}$ | ....... | $\lambda_{KM}$ |

As is obvious from Table 1, so long as the wavelength group "i" is input to an input port "i" of the third optical demultiplexer 123 (i=1, 2, ..., M), wavelengths pertaining to the wavelength group "i" are separately-output to respective output ports of the third optical demultiplexer 123. A demultiplexing characteristic such as that provided in Table 1 can be readily attained by use of a wavelength router function of an arrayed waveguide grating (AWG)-type optical demultiplexer/multiplexer. The optical signals output from the third optical demultiplexer 123 enter corresponding optical add/drop circuits 124-1 to 124-K. The optical signals output from the optical add/drop circuits 124-1 to 124-K enter a third optical demultiplexer 125 having K input ports and M output ports. An arrayed waveguide grating (AWG)-type optical demultiplexer/multiplexer having a characteristic reverse that of the input/output wavelength characteristic of the third optical demultiplexer 123 is used as the third optical demultiplexer 125. As a result, the wavelength group "i" can be reconstructed at an output port "i" of the third optical demultiplexer 125. The output ports of the third optical demultiplexer 125 are connected to input ports of corresponding fourth optical switches 126-1 to 126-M such that each output port is connected to one of two input ports belonging to the respective optical switch. The remaining input ports of the respective fourth optical switches 126-1 to 126-M are connected to the respective output ports of the second optical demultiplexers 116-1 to 116-M. The optical signals output from the respective fourth optical switches 126-1 to 126-M are multiplexed by the first optical multiplexer 117, and the thus-multiplexed optical signal is output to the optical transmission path 111-2 after having been amplified by the optical amplifier 118.

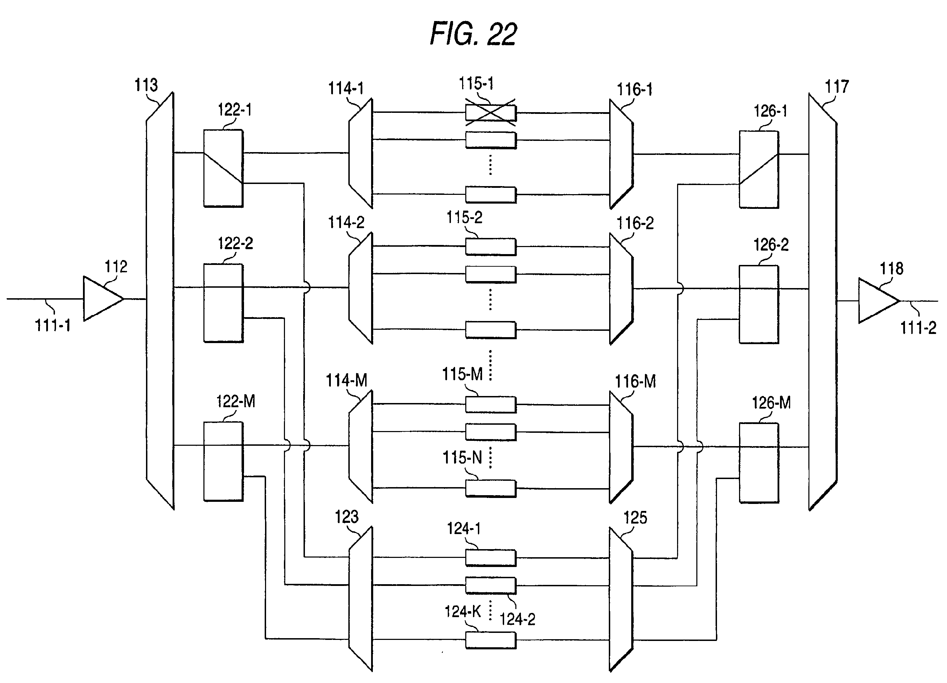

FIG. 22 shows the operation of the OADM node device performed in the event that failures arise in the optical add/drop circuit 115-1 assigned to the wavelength group 1. In a normal operating state, the third optical switches 122-1 to 122-M are set such that optical signals belonging to respective wavelength groups are input to the corresponding second optical demultiplexers 114-1 to 114-M. In the event that a failure arises in the optical add/drop circuit 115-1 assigned to the wavelength group 1, the third optical switch 122-1 changes the transmission direction of the wavelength group 1 such that the wavelength group 1 enters the third optical demultiplexer 123. Optical signals of respective wavelengths into which the wavelength group 1 is divided by the third optical demultiplexer 123 are input to the corresponding optical add/drop circuits 124-1 to 124-K. In each of the optical add/drop circuits 124-1 to 124-K, only an optical signal of desired wavelength is added or dropped. The optical signals output from the optical add/drop circuits 124-1 to 124-K enter the third optical multiplexer 125, wherein the wavelength group 1 is reconstructed. The fourth optical switch 126-1 performs a switching operation such that the optical signal output from the third optical multiplexer 125 enters the first optical multiplexer 117.

In the sixth embodiment, a single redundancy device can cope with M wavelength groups. In other words, a system of M:1 redundancy can be established without use of an optical matrix switch. Accordingly, an M:1 redundancy system can be embodied even in a case where the number of wavelengths is increased.

In the event of occurrence of a failure, a failure-recovery operation can be performed in a closed state within the faulty OADM node device, thus facilitating the OAM of a light-wave network.

Although the above explanation has described a case where an OADM node device is embodied without use of regenerative repeaters, the present invention can also be applied to an OADM node device employing regenerative repeaters. In such a case, regenerative repeaters to be placed in the optical paths along which optical signals output from the third optical demultiplexer 123 are transmitted must be provided with wavelength-tunable light sources. The wavelength-tunable light sources are required to effect a change not over N wavelengths but over M wavelengths. For example, provided that N=64 and M=8, a wavelength-tunable range of about 6 nm is satisfactory. Since the wavelength-tunable range of this level can be sufficiently achieved by a current distributed Bragg reflector semiconductor laser, there is a high possibility of embodying an OADM node device by use of regenerative repeaters.

In the second through sixth embodiments, a two-input/two-output optical switch is used for the optical add/drop circuits 115-1 to 115-N. However, there may also be used the one-input/two-output drop optical switch 10 and the two-input/one-output add optical switch 20, which are used in each of the optical add/drop circuits 4-1 to 4-N of the first embodiment.

As has been described above, the present invention yields the following advantageous results.

(1) Drop optical switches and add optical switches are separately provided in an OADM node device, and they are controlled independently. Even in the event of occurrence of a failure in the drop optical switch during a dropping operation, the add optical switch is forcefully brought into an adding operation state, thereby preventing leakage of an optical signal to another node. Consequently, there can be constructed a highly reliable light-wave network.

(2) A variable optical attenuator is interposed between a drop optical switch and an add optical switch. Even in the event of occurrence of failures in both the drop optical switch and the add optical switch, leakage of an optical signal to another node can be prevented, thus improving the reliability of a light-wave network to a much greater extent.

(3) In a case where the attenuation of a variable optical attenuator is lowered below a predetermined level during a through operation of an optical add/drop circuit, an anomaly signal is generated, thus preventing a failure in the light-wave network before it actually occurs.

(4) A Q value is particularly monitored as a transmission characteristic value of an optical signal in each node, thereby enabling facilitated location of a failure. Accordingly, the time required for restoring the network from a failure is shortened, thus improving the efficiency of utilization of a light-wave network.

(5) A changeover control method for avoiding a failure is facilitated, thus enabling provision of a highly reliable and low-cost OADM node device.

(6) At the time of reconstruction of an optical transmission path or in the event of a failure, the time constant of switching operation of optical switches and optical path changeover switches is set to be larger than the response time of AGC function of optical amplifiers and optical receivers, thereby preventing occurrence of an optical surge, which would otherwise be caused during a switching operation, and achieving a stable transmission characteristic.

(7) The number of optical transmission paths per node which induce coherent cross-talk can be reduced so as to be approximately equal to the number of wavelengths pertaining to one of wavelength groups into which a wavelength-multiplexed optical signal is divided. Therefore, even in the case of OADM node devices being connected in the form of multistage connection, there can be provided an OADM node device capable of preventing deterioration in the transmission characteristic of a light-wave transmission network due to coherent cross-talk.

(8) A wavelength-multiplexed optical signal is divided into wavelength groups by means of a periodic characteristic of an optical demultiplexer and a periodic characteristic of an optical multiplexer, thereby obviating a necessity for provision of a guard band between adjacent wavelengths. Consequently, the efficiency of bandwidth utilization is improved.

A variation in insertion loss arising in an optical demultiplexer/multiplexer can be compensated for on a per-wavelength-group basis, and hence the cost of OADM node devices and the scale of the OADM node can be reduced.

(9) Wavelength groups into which a wavelength-multiplexed optical signal is divided are handled as a unit, and hence there can be provided an OADM node device capable of ensuring scalability. Further, the OAM of a light-wave network can be performed on a per-wavelength-group-basis, thus enabling provision of an OADM node device offering superior operability.

(10) A redundant system is constructed through use of a wavelength router function of an arrayed waveguide grating (AWG)-type optical demultiplexer/multiplexer. Thus, a system of N:1 redundancy can be constructed without use of an optical matrix switch, thereby enabling provision of a highly reliable and low-cost OADM node device.

(11) In the event of occurrence of a failure in an OADM node device, a failure-recovery operation can be performed in a closed state within the node, thus enabling provision of an OADM node device which facilitates the OAM of a light-wave network.

**Claims**

1. An optical add/drop multiplexer node device for use with a light-wave network having at least one pair of optical transmission paths (71, 73) for transmitting optical signals in opposite directions, the node device comprising:

first and second optical demultiplexing means (113; 114-1-114-M) and first and second optical multiplexing means (117; 116-1-116-M);
the first optical demultiplexing means (113) being adapted to divide a wavelength-multiplexed optical signal which has been transmitted over the respective optical transmission path (111-1) into M wavelength groups each having K optical signals whose wavelengths are periodically related;
a respective said second optical demultiplexing means (114-1-114-M) for each of the wavelength groups, for dividing the respective wavelength group into K optical signals according to wavelength;

respective add/drop means (115-1-115-M) for adding/dropping each of the optical signals divided by the respective second optical demultiplexing means; and

a respective said second optical multiplexing means (116-1-116-M) for multiplexing the K optical signals output from the respective add/drop means to reconstruct the respective wavelength group;

the first optical multiplexing means (119) being adapted to multiplex the M wavelength groups output from the second optical multiplexing means to reconstruct the wavelength multiplexed optical signal, and to supply the optical signal to the optical transmission path (111-2);

**characterised in that** the first optical demultiplexing means (113) and the first optical multiplexing means (117) are an arrayed waveguide grating (AWG) type optical multiplexer/demultiplexer and have a free spectral range periodicity and M and K are larger than two.

2. The optical add/drop multiplexer node device as defined in Claim 1, wherein the transmission bandwidth of the second optical demultiplexing means (114-1-114-M) and the transmission bandwidth of the second optical multiplexing means (116-1-116-M) are sufficiently larger than the transmission bandwidth of the first optical demultiplexing means (113) and the transmission band width of the first optical multiplexing means (118).

3. The optical add/drop node multiplexer device as defined in Claim 1, wherein optical power level control means (140-1-140-M) is interposed between the first optical demultiplexing means (113) and the second optical demultiplexing means (114-1-114-M) or between the second optical multiplexing means (116-1-116-M) and the first optical multiplexing means (117).

4. The optical add/drop multiplexer node device as defined in Claim 1, wherein the wavelength groups are respectively assigned to a working system and a protection system beforehand, and the optical add/drop node device is provided with means (81-84) which switches the working-system wavelength group to a predetermined protection wavelength group in the event of occurrence of a failure in a network provided in the working-system wavelength group.

5. The optical add/drop multiplexer node device as defined in Claim 4, wherein the working-system wavelength groups and the protection wavelength groups correspond to adjacent wavelength groups.

6. An optical add/drop multiplexer node device for use with a light-wave network having at least one pair of optical transmission paths (71-1, 71-2, 73-1, 73-2) for transmitting optical signals in opposite directions, the node device comprising:

first and second optical demultiplexing means (113; 114-1-114-M) and first and second optical multiplexing means (117; 116-1-116-M);

the first optical demultiplexing means (113) being adapted to divide a wavelength-multiplexed optical signal which has been transmitted over the respective optical transmission path into M wavelength groups, each having K optical signals whose wavelengths are periodically related; and **characterised by:**

a plurality of first one-input/two-output optical switches (122-1-122-M) which change the transmission direction of an optical signal output from the first optical demultiplexing means (113);

a respective said second optical demultiplexing means (114-1-114-M), connected to the first output port of a respective said first optical switches (122-1-122-M), for dividing the respective wavelength group into K optical signals according to wavelength;

respective first add/drop means (115-1-115-M) for adding/dropping each of the optical signals divided by the respective second optical demultiplexing means (114-1-114-M);

a respective second optical multiplexing means (116-1-116-M) for multiplexing the K optical signals output from the respective add/drop means to reconstruct the respective wavelength group;

the first optical multiplexing means (117) being adapted to multiplex the M wavelength groups output from the second optical multiplexing means to reconstruct the wavelength multiplexed optical signal, and to supply the optical signal to the optical transmission path (111-2);

the first optical demultiplexing means (113) and the first optical multiplexer means (117) being arrayed waveguide grating (AWG) type optical demultiplexer/multiplexer having a free spectral range (ESR) periodicity;

third optical demultiplexing means (123) connected to the second output ports of the first optical switches (122-1-122-M), for dividing the respective wavelength group into K optical signals according to wavelength, said third optical demultiplexing means (123) having a wavelength routing function;

second add/drop means (124-1-124-K) for adding or dropping the optical signal output from the third optical demultiplexing means (123);

third optical multiplexing means (125) for multiplexing the K optical signals output from the second add/drop means (124-1-124-K), the third optical multiplexing means (125) having a wavelength routing function; and

a respective second optical switch (126-1-126-M) having two input ports and one output port, adapted to receive a signal output from a said second optical multiplexing means (116-1-116-M) and a signal output from the third optical multiplexing means (125), and wherein the first optical demultiplexing means (113) and the first optical multiplexing means (117) have a free spectral range periodicity, and M and K are larger than two.

7. The optical add/drop multiplexer node device as defined in Claim 6, wherein the transmission bandwidth of the second optical demultiplexing means (114-1-114-M) and the transmission bandwidth of the second multiplexing means (116-1-116-M) are sufficiently larger than the transmission bandwidth of the first optical demultiplexing means (113) and the transmission bandwidth of the first optical multiplexing means (117).

**Patentansprüche**

1. Optische Add/Drop-Multiplexer-Knotenvorrichtung zur Verwendung mit einem Lichtwellennetzwerk mit wenigstens einem Paar optischer Übertragungspfade (71, 73) zum Übertragen optischer Signale in entgegengesetzten Richtungen, wobei die Knotenvorrichtung umfasst:

erste und zweite optische Demultiplex-Einrichtungen (113; 114-1 - 114-M) und erste und zweite optische Multiplex-Einrichtungen (117; 116-1 - 116-M);
wobei die ersten optischen Demultiplex-Einrichtungen (113) ausgebildet sind zum Teilen eines wellenlängengemultiplexten optischen Signals, das über den jeweiligen optischen Übertragungspfad (111-1) übertragen worden ist, in M Wellenlängengruppen, die jeweils K optische Signale haben, deren Wellenlängen periodisch bezogen sind;
eine jeweilige zweite optische Demultiplex-Einrichtung (114-1 - 114-M) für jede der Wellenlängengruppen, zum Teilen der jeweiligen Wellenlängengruppe in K optische Signale gemäß der Wellenlänge;
jeweilige Add/Drop-Einrichtungen (115-1 - 115-M) zum Hinzufügen/Entnehmen jedes der durch die jeweilige zweite optische Demultiplex-Einrichtung geteilten optischen Signale; und
eine jeweilige zweite optische Multiplex-Einrichtung (116-1 - 116-M) zum Multiplexen der von der jeweiligen Add/Drop-Einrichtung ausgegebenen K optischen Signale zum Rekonstruieren der jeweiligen Wellenlängengruppe;
wobei die ersten optischen Multiplex-Einrichtungen (119) ausgebildet sind zum Multiplexen der von den zweiten optischen Multiplex-Einrichtungen ausgegebenen M Wellenlängengruppen zum Rekonstruieren der wellenlängen-gemultiplexten otpischen Signale, und zum Liefern des optischen Signals an den optischen Übertragungspfad (111-2);
**dadurch gekennzeichnet, dass** die ersten optischen Demultiplex-Einrichtungen (113) und die ersten optischen Multiplex-Einrichtungen (117) ein Multiplexer/Demultiplexer vom Array-Wellenleitergitter-(AWG) Typ sind und eine freie Spektralbereichsperiodizität haben und M und K größer als zwei sind.

2. Optische Add/Drop-Multiplexer-Knotenvorrichtung gemäß Anspruch 1, wobei die Übertragungsbandbreite der zweiten optischen Demultiplex-Einrichtungen (114-1 - 114-M) und die Übertragungsbandbreite der zweiten optischen Multiplex-Einrichtungen (116-1 - 116-M) ausreichend größer als die Übertragungsbandbreite der ersten optischen Demultiplex-Einrichtungen (113) und die Übertragungsbandbreite der ersten optischen Multiplex-Einrichtungen (118) sind.

3. Optische Add/Drop-Multiplexer-Knotenvorrichtung gemäß Anspruch 1, wobei eine Steuereinrichtung für einen optischen Leistungspegel (140-1 - 140-M) zwischen den ersten optischen Demultiplex-Einrichtungen (113) und den zweiten optischen Demultiplex-Einrichtungen (114-1 - 114-M) oder zwischen den zweiten optischen Multiplex-Einrichtungen (116-1 - 116-M) und den ersten optischen Multiplex-Einrichtungen (117) angeordnet ist.

4. Optische Add/Drop-Multiplexer-Knotenvorrichtung gemäß Anspruch 1, wobei die Wellenlängengruppen jeweils vorweg einem Arbeitssystem und einem Schutzsystem zugewiesen sind, und die optische Add/Drop-Knotenvorrichtung mit einer Einrichtung (81-84) bereitgestellt ist, welche die Arbeitssystem-Wellenlängengruppe auf eine vorbestimmte Schutz-Wellenlängengruppe bei dem Ereignis eines Auftretens einer Störung in einem in der Arbeitssystem-Wellenlängengruppe bereitgestellten Netzwerk schaltet.

5. Optische Add/Drop-Multiplexer-Knotenvorrichtung gemäß Anspruch 4, wobei die Arbeitssystem-Wellenlängengruppen und die Schutz-Wellenlängengruppen benachbarten Wellenlängengruppen entsprechen.

6. Optische Add/Drop-Multiplexer-Knotenvorrichtung zur Verwendung mit einem Lichtwellennetzwerk mit wenigstens einem Paar optischer Übertragungspfade (71-1, 71-2, 73-1, 73-2) zum Übertragen optischer Signale in entgegengesetzten Richtungen, wobei die Knotenvorrichtung umfasst:

erste und zweite optische Demultiplex-Einrichtungen (113; 114-1 - 114-M) und erste und zweite optische Multiplex-Einrichtungen (117; 116-1 - 116-M);
wobei die ersten optischen Demultiplex-Einrichtungen (113) ausgebildet sind zum Teilen eines wellenlängengemultiplexten optischen Signals, das über den jeweiligen optischen Übertragungspfad übertragen worden ist, in M Wellenlängengruppen, die jeweils K optische Signale haben, deren Wellenlängen periodisch bezogen sind;
und **gekennzeichnet durch**:

eine Vielzahl erster optischer Ein-Eingangs/Zwei-Ausgangs-Schalter (122-1 - 122-M), die die Übertragungsrichtung eines von den ersten optischen Demultiplex-Einrichtungen (113) ausgegebenen optischen Signals ändern;
eine jeweilige zweite optische Demultiplex-Einrichtung (114-1 - 114-M), verbunden mit dem ersten Ausgangsanschluss eines jeweiligen ersten optischen Schalters (122-1 - 122-M), zum Teilen der jeweiligen Wellenlängengruppe in K optische Signale gemäß der Wellenlänge;
jeweilige Add/Drop-Einrichtungen (115-1 - 115-M) zum Hinzufügen/Entnehmen jedes der **durch** die jeweilige zweite optische Demultiplex-Einrichtung (114-1 - 114-M) geteilten optischen Signale;
eine jeweilige zweite optische Multiplex-Einrichtung (116-1 - 116-M) zum Multiplexen der von der jeweiligen Add/Drop-Einrichtung ausgegebenen K optischen Signale zum Rekonstruieren der jeweiligen Wellenlängengruppe;
wobei die ersten optischen Multiplex-Einrichtungen (117) ausgebildet sind zum Multiplexen der von den zweiten optischen Multiplex-Einrichtungen ausgegebenen M Wellenlängengruppen zum Rekonstruieren der wellenlängen-gemultiplexten otpischen Signale, und zum Liefern des optischen Signals an den optischen Übertragungspfad (111-2);
wobei die ersten optischen Demultiplex-Einrichtungen (113) und die ersten optischen Multiplex-Einrichtungen (117) ein Demultiplexer/Multiplexer vom Array-Wellenleitergitter- (AWG) Typ sind mit einer freien Spektralbereichsperiodizität (ESR);
dritte optische Demultiplex-Einrichtungen (123), die mit den zweiten Ausgangsanschlüssen der ersten optischen Schalter (122-1 - 122-M) verbunden sind, zum Teilen der jeweiligen Wellenlängengruppe in K optische Signale gemäß der Wellenlänge, wobei die dritten optischen Demultiplex-Einrichtungen (123) eine Wellenlängen-Routing-Funktion haben;
zweite Add/Drop-Einrichtungen (124-1 - 124-K) zum Hinzufügen oder Entnehmen des **durch** die dritten optischen Demultiplex-Einrichtungen (123) ausgegebenen optischen Signals;
dritte optische Multiplex-Einrichtungen (125) zum Multiplexen der von den zweiten Add/Drop-Einrichtungen (124-1 - 124-K) ausgegebenen K optischen Signale, wobei die dritten optischen Multiplex-Einrichtungen (125) eine Wellenlängen-Routing-Funktion haben; und
wobei ein jeweiliger zweiter optischer Schalter (126-1 - 126-M) zwei Eingangsanschlüsse und einen Ausgangsanschluss hat, ausgebildet zum Empfangen eines von den zweiten optischen Multiplex-Einrichtungen (116-1 - 116-M) ausgegebenen Signals und eines von den dritten optischen Multiplex-Einrichtungen (125) ausgegebenen Signals, und wobei die ersten optischen Demultiplex-Einrichtungen (113) und die ersten optischen Multiplex-Einrichtungen (117) eine freie Spektralbereichsperiodizität haben, und M und K größer als zwei sind.

7. Optische Add/Drop-Multiplexer-Knotenvorrichtung gemäß Anspruch 6, wobei die Übertragungsbandbreite der zweiten optischen Demultiplex-Einrichtungen (114-1 - 114-M) und die Übertragungsbandbreite der zweiten optischen Multiplex-Einrichtungen (116-1 - 116-M) ausreichend größer als die Übertragungsbandbreite der ersten optischen Demultiplex-Einrichtungen (113) und die Übertragungsbandbreite der ersten optischen Multiplex-Einrichtungen (117) sind.

**Revendications**

1. Dispositif nodal à multiplexage optique pour insertion et extraction à utiliser avec un réseau d'onde lumineuse possédant au moins une paire de chemins de transmission optique (71, 73) destinés à transmettre des signaux optiques dans des directions opposées, le dispositif nodal comprenant :

   des premier et deuxième moyens de démultiplexage optique (113 ; 114-1-114-M) et des premier et deuxième moyens de multiplexage optique (117 ; 116-1-116-M) ;
   le premier moyen de démultiplexage optique (113) étant adapté pour diviser un signal optique multiplexé en longueur d'onde qui a été transmis sur le chemin de transmission optique respectif (111-1) en M groupes de longueurs d'onde comportant chacun K signaux optiques dont les longueurs d'onde sont périodiquement liées ;
   un dit deuxième moyen de démultiplexage optique respectif (114-1-114-M) pour chacun des groupes de longueurs d'onde, pour diviser le groupe de longueurs d'onde respectif en K signaux optiques selon la longueur d'onde ;
   un moyen d'insertion et d'extraction respectif (115-1-115-M) destiné à insérer et extraire chacun des signaux optiques divisés par le deuxième moyen de démultiplexage optique respectif ; et
   un dit deuxième moyen de multiplexage optique respectif (116-1-116-M) destiné à multiplexer les K signaux optiques émis par le moyen d'insertion et d'extraction respectif afin de reconstruire le groupe de longueurs d'onde respectif ;
   le premier moyen de multiplexage optique (119) étant adapté pour multiplexer les M groupes de longueurs d'onde émis par le deuxième moyen de multiplexage optique afin de reconstruire le signal optique multiplexé en longueur d'onde, et pour envoyer le signal optique au chemin de transmission optique (111-2) ;
   **caractérisé en ce que** le premier moyen de démultiplexage optique (113) et le premier moyen de multiplexage optique (117) sont un multiplexeur/démultiplexeur optique de type réseau de guide d'onde (AWG) et ont une périodicité de plage spectrale libre et M et K sont supérieurs à deux.

2. Dispositif nodal à multiplexage optique pour insertion et extraction selon la revendication 1, dans lequel la bande passante de transmission du deuxième moyen de démultiplexage optique (114-1-114-M) et la bande passante de transmission du deuxième moyen de multiplexage optique (116-1-116-M) sont suffisamment plus grandes que la bande passante de transmission du premier moyen de démultiplexage optique (113) et la bande passante de transmission du premier moyen de multiplexage optique (118).

3. Dispositif nodal à multiplexage optique pour insertion et extraction selon la revendication 1, dans lequel un moyen de commande de niveau de puissance optique (140-1-140-M) est interposé entre le premier moyen de démultiplexage optique (113) et le deuxième moyen de démultiplexage optique (114-1-114-M) ou entre le deuxième moyen de multiplexage optique (116-1-116-M) et le premier moyen de multiplexage optique (117).

4. Dispositif nodal à multiplexage optique pour insertion et extraction selon la revendication 1, dans lequel les groupes de longueurs d'onde sont respectivement attribués à un système d'exploitation et à un système de protection à l'avance, et le dispositif nodal optique pour insertion et extraction est doté d'un moyen (81-84) qui commute le groupe de longueurs d'onde de système d'exploitation à un groupe de longueurs d'onde de protection prédéterminé dans le cas d'une défaillance dans un réseau situé dans le groupe de longueurs d'onde de système d'exploitation.

5. Dispositif nodal à multiplexage optique pour insertion et extraction selon la revendication 4, dans lequel les groupes de longueurs d'onde de système d'exploitation et les groupes de longueurs d'onde de protection correspondent à des groupes de longueurs d'onde adjacents.

6. Dispositif nodal à multiplexage optique pour insertion et extraction à utiliser avec un réseau d'onde lumineuse possédant au moins une paire de chemins de transmission optique (71-1, 71-2, 73-1, 73-2) destinés à transmettre des signaux optiques dans des directions opposées, le dispositif nodal comprenant :

   des premier et deuxième moyens de démultiplexage optique (113 ; 114-1-114-M) et des premier et deuxième moyens de multiplexage optique (117 ; 116-1-116-M) ;
   des premier et deuxième moyens de démultiplexage optique (113 ; 114-1-114-M) et des premier et deuxième moyens de multiplexage optique (117 ; 116-1-116-M) ;
   le premier moyen de démultiplexage optique (113) étant adapté pour diviser un signal optique multiplexé en longueur d'onde qui a été transmis sur le chemin de transmission optique respectif en M groupes de longueurs d'onde comportant chacun K signaux optiques dont les longueurs d'onde sont périodiquement liées ; et **carac-**

térisé par :

une pluralité de premiers commutateurs optiques à une entrée/deux sorties (122-1-122-M) qui changent la direction de transmission d'un signal optique émis par le premier moyen de démultiplexage optique (113) ;
un dit deuxième moyen de démultiplexage optique respectif (114-1-114-M), connecté au premier port de sortie d'un commutateur respectif desdits premiers commutateurs optiques (122-1-122-M), pour diviser le groupe de longueurs d'onde respectif en K signaux optiques selon la longueur d'onde ;
un premier moyen d'insertion et d'extraction respectif (115-1-115-M) destiné à insérer et extraire chacun des signaux optiques divisés par le deuxième moyen de démultiplexage optique respectif (114-1-114-M) ;
un dit deuxième moyen de multiplexage optique respectif (116-1-116-M) destiné à multiplexer les K signaux optiques émis par le moyen d'insertion et d'extraction respectif afin de reconstruire le groupe de longueurs d'onde respectif ;
le premier moyen de multiplexage optique (117) étant adapté pour multiplexer les M groupes de longueurs d'onde émis par le deuxième moyen de multiplexage optique afin de reconstruire le signal optique multiplexé en longueur d'onde, et pour envoyer le signal optique au chemin de transmission optique (111-2) ;
le premier moyen de démultiplexage optique (113) et le premier moyen de multiplexage optique (117) étant un multiplexeur/démultiplexeur optique de type réseau de guide d'onde (AWG) et ont une périodicité de plage spectrale libre (ESR) ;
un troisième moyen de démultiplexage optique (123) connecté aux deuxièmes ports de sortie des premiers commutateurs optiques (122-1-122-M), pour diviser le groupe de longueurs d'onde respectif en K signaux optiques selon la longueur d'onde, ledit troisième moyen de démultiplexage optique (123) ayant un fonction de routage de longueur d'onde ;
un deuxième moyen d'insertion et d'extraction (124-1-124-K) destiné à insérer ou extraire le signal optique émis par le troisième moyen de démultiplexage optique (123) ;
un troisième moyen de multiplexage optique (125) destiné à multiplexer les K signaux optiques émis par le deuxième moyen d'insertion et d'extraction (124-1-124-K), le troisième moyen de multiplexage optique (125) ayant une fonction de routage de longueur d'onde ; et
un deuxième commutateur optique respectif (126-1-126-M) possédant deux ports d'entrée et un seul port de sortie, adapté pour recevoir un signal émis par un dit deuxième moyen de multiplexage optique (116-1-116-M) et un signal émis par le troisième moyen de multiplexage optique (125), le premier moyen de démultiplexage optique (113) et le premier moyen de multiplexage optique (117) ayant une périodicité de plage spectrale libre, et M et K étant supérieurs à deux.

7. Dispositif nodal à multiplexage optique pour insertion et extraction selon la revendication 6, dans lequel la bande passante de transmission du deuxième moyen de démultiplexage optique (114-1-114-M) et la bande passante du deuxième moyen de multiplexage (116-1-116-M) sont suffisamment plus grandes que la bande passante de transmission du premier moyen de démultiplexage optique (113) et la bande passante du premier moyen de multiplexage (117).

## FIG. 1

EP 1 043 859 B1

## FIG. 2

EP 1 043 859 B1

## FIG. 3

PORT 1

PORT 2

PORT 3

31

32

HEATER ENERGIZATION CIRCUIT ⌐ 33

## FIG. 4

OUTPUT POWER

PORT 1 → PORT 3

PORT 1 → PORT 2

CURRENT SUPPLIED TO HEATER

FIG. 5

# FIG. 6

## FIG. 7

MONITOR/CONTROL SECTION ~100

## FIG. 8

## FIG. 9

EP 1 043 859 B1

# FIG. 10

MONITOR/CONTROL SECTION — 100

32

## FIG. 11

## FIG. 12

FIG. 13

EP 1 043 859 B1

## FIG. 14

FIG. 15

EP 1 043 859 B1

FIG. 16

# FIG. 17

EP 1 043 859 B1

## FIG. 18

EP 1 043 859 B1

FIG. 19

EP 1 043 859 B1

FIG. 20

EP 1 043 859 B1

FIG. 21

## FIG. 22

# FIG. 23

EP 1 043 859 B1

BAND A        BAND B        BAND C        BAND D

WAVELENGTH

$\lambda 1$   $\lambda 2$   $\lambda 3$   $\lambda 4$     $\lambda 5$   $\lambda 6$   $\lambda 7$   $\lambda 8$     $\lambda 9$   $\lambda 10$   $\lambda 11$   $\lambda 12$     $\lambda 13$   $\lambda 14$   $\lambda 15$   $\lambda 16$

GUARD BAND       GUARD BAND       GUARD BAND